(19) **Europäisches Patentamt**
**European Patent Office**
**Office européen des brevets**

(11) **EP 2 873 820 B1**

(12) **EUROPEAN PATENT SPECIFICATION**

(45) Date of publication and mention
of the grant of the patent:
**17.08.2016 Bulletin 2016/33**

(51) Int Cl.:
*F01N 3/08* *(2006.01)*    *F01N 3/20* *(2006.01)*
*F01N 9/00* *(2006.01)*    *F01N 13/00* *(2010.01)*

(21) Application number: **14186935.4**

(22) Date of filing: **30.09.2014**

(54) **EXHAUST PURIFICATION SYSTEM OF INTERNAL COMBUSTION ENGINE**

Abgasreinigungssystem für einen Verbrennungsmotor

Système de purification de gaz d'échappement d'un moteur à combustion interne

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2013 JP 2013235853**

(43) Date of publication of application:
**20.05.2015 Bulletin 2015/21**

(73) Proprietor: **Toyota Jidosha Kabushiki Kaisha Toyota-shi, Aichi-ken 471-8571 (JP)**

(72) Inventor: **Mori, Toshihiro**
**AICHI-KEN, 471-8571 (JP)**

(74) Representative: **Intès, Didier Gérard André et al**
**Cabinet Beau de Loménie**
**158, rue de l'Université**
**75340 Paris Cedex 07 (FR)**

(56) References cited:
**EP-A1- 2 034 147      DE-A1-102010 055 642**
**US-A1- 2013 283 772**

**Description**

Technical Field

The present invention relates to an exhaust purification system of an internal combustion engine as disclosed in DE 102010055642 A1.

Background Art

Known in the art is an internal combustion engine which uses an aqueous urea solution as a reducing agent for reducing $NO_x$, wherein a pair of $NO_x$ selective reduction catalysts are arranged in series in an engine exhaust passage, an aqueous urea solution feed valve is arranged upstream of these pair of $NO_x$ selective reduction catalysts in the engine exhaust passage for feeding an aqueous urea solution, and the amount of feed of the aqueous urea solution from the aqueous urea solution feed valve is controlled so that the ammonia which is produced from the aqueous urea solution does not slip through the pair of $NO_x$ selective reduction catalysts (for example, see PTL 1).

Citation List

Patent Literature

PTL 1: Japanese Patent Publication No. 2012-215154A

Summary of Invention

Technical Problem

In this regard, when using a reducing agent which is injected from a reducing agent feed valve to try to reduce the $NO_x$ on an exhaust purification catalyst, if the amount of the reducing agent injected from the reducing agent feed valve is greater than the amount of the reducing agent which is consumed for reducing the $NO_x$ on the exhaust purification catalyst, the excess reducing agent will slip through the exhaust purification catalyst. Expressing this in a bit more detail, if the amount of the reducing agent injected from the reducing agent feed valve per unit time becomes greater than the amount of the reducing agent which is consumed for reducing the $NO_x$ per unit time on the exhaust purification catalyst, the excess reducing agent will slip through the exhaust purification catalyst. Therefore, to prevent the reducing agent from slipping through the exhaust purification catalyst, the amount of the reducing agent injected from the reducing agent feed valve per unit time has to be prevented from exceeding the amount of the reducing agent which is consumed for reducing the $NO_x$ per unit time on the exhaust purification catalyst. In this case, the amount of the reducing agent injected from the reducing agent feed valve per unit time is determined by the injection pressure of the reducing agent feed valve, therefore usually the injection pressure of the reducing agent feed valve is set so that the amount of the reducing agent injected from the reducing agent feed valve per unit time does not exceed the amount of the reducing agent which is consumed for reducing the $NO_x$ per unit time on the exhaust purification catalyst.

On the other hand, in an internal combustion engine which is configured to use a reducing agent injected from a reducing agent feed valve to reduce $NO_x$ at an exhaust purification catalyst, as a reducing agent feed device for feeding the reducing agent to the reducing agent feed valve, it is being studied to use a reducing agent feed device which has the function of making the injection pressure of the reducing agent feed valve increase, but does not have the function of making it decrease. In this regard, in the actual operating state, for example, sometimes, when the exhaust purification catalyst is low in temperature, the speed of reduction of $NO_x$ by the reducing agent becomes slow. In this case, the amount of the reducing agent which is consumed for reducing the $NO_x$ per unit time at the exhaust purification catalyst ends up becoming smaller. In this case, to prevent the excess reducing agent from slipping through the exhaust purification catalyst, the amount of the reducing agent injected from the reducing agent feed valve per unit time has to be made to decrease. For this, the injection pressure of the reducing agent feed valve has to be made to fall. However, when using a reducing agent feed device which has the function of making the injection pressure of the reducing agent feed valve increase, but does not have the function of making it decrease, there is the problem that the injection pressure of the reducing agent feed valve cannot be lowered.

An object of the present invention is to provide an exhaust purification system of an internal combustion engine wherein even if using a reducing agent feed device which has the function of making the injection pressure of the reducing agent feed valve increase, but does not have the function of making it decrease, it is possible to keep excess reducing agent from slipping through the exhaust purification catalyst.

Solution to Problem

That is, according to the present invention, there is provided an exhaust purification system of an internal combustion engine comprising an exhaust purification catalyst which is arranged in an engine exhaust passage, a reducing agent feed valve which is arranged in the engine exhaust passage upstream of the exhaust purification catalyst, a reducing agent feed device for feeding a reducing agent to the reducing agent feed valve, and a reducing agent injection control device for controlling the injection action of the reducing agent from the reducing agent feed valve, wherein the reducing agent feed device has the function of making the injection pressure of the reducing agent feed valve increase, but does not have the function of making the injection pressure of the reducing agent feed valve decrease, and the injection pressure of the reducing agent feed valve has a limit injection pressure which causes slip through of the reducing agent in the exhaust purification catalyst when the reducing agent is injected from the reducing agent feed valve, characterized in that when the injection pressure of the reducing agent feed valve exceeds an allowable injection pressure which is lower than the limit injection pressure by exactly a predetermined pressure, the reducing agent is injected from the reducing agent feed valve, whereby the injection pressure of the reducing agent feed valve is made to fall.

Advantageous Effects of Invention

If the injection pressure of the reducing agent feed valve exceeds the allowable injection pressure, the injection pressure of the reducing agent feed valve is made to fall by injecting the reducing agent from the reducing agent feed valve. As a result, the injection pressure of the reducing agent feed valve never becomes higher than the limit injection pressure which causes slip through of the reducing agent, so excess reducing agent can be kept from slipping through the exhaust purification catalyst.

Brief Description of Drawings

[FIG. 1] FIG. 1 is an overview of a compression ignition type internal combustion engine.
[FIG. 2] FIG. 2 is a view which illustratively shows a surface portion of a catalyst carrier.
[FIG. 3] FIG. 3 is a view which shows changes in an air-fuel ratio of exhaust gas which flows into an exhaust purification catalyst.
[FIGS. 4] FIGS. 4A and 4B are views for explaining an oxidation reduction reaction in an exhaust purification catalyst.
[FIGS. 5] FIGS. 5A and 5B show maps of an injection amount of hydrocarbons etc.
[FIG. 6] FIG. 6 is a view for explaining a hydrocarbon feed device.
[FIG. 7] FIG. 7 is a time chart which shows a change in an injection pressure PX of a hydrocarbon feed valve etc.
[FIGS. 8] FIGS. 8A, 8B, and 8C are views which show an HC slip through amount.
[FIG. 9] FIG. 9 is a view for explaining a relationship of the injection pressure PX etc. and the HC slip through amount.
[FIGS. 10] FIGS. 10A, 10B, and 10C are views which show the limit injection pressure PZ which causes slip through of HC.
[FIGS. 11] FIGS. 11A, 11B, and 11C are views which show the limit injection pressure PZ which causes slip through of HC.
[FIG. 12] FIG. 12 is a time chart which shows a change in the injection pressure PX with respect to a change in the limit injection pressure PZ.
[FIGS. 13] FIGS. 13A and 13B are views for explaining an example of the method of predicting the limit injection pressure PZ.
[FIGS. 14] FIGS. 14A and 14B are views for explaining an allowable injection amount WA.
[FIGS. 15] FIGS. 15A, 15B, and 15C are views for explaining the allowable injection amount WA.
[FIGS. 16] FIGS. 16A and 16B are views for explaining an allowable injection amount WB.
[FIGS. 17] FIGS. 17A, 17B, and 17C are views for explaining the allowable injection amount WB.
[FIG. 18] FIG. 18 is a flow chart for control for preventing HC slip through.
[FIG. 19] FIG. 19 is a flow chart for pressure decreasing control.
[FIG. 20] FIG. 20 is a flow chart for pressure increasing control.

Description of Embodiments

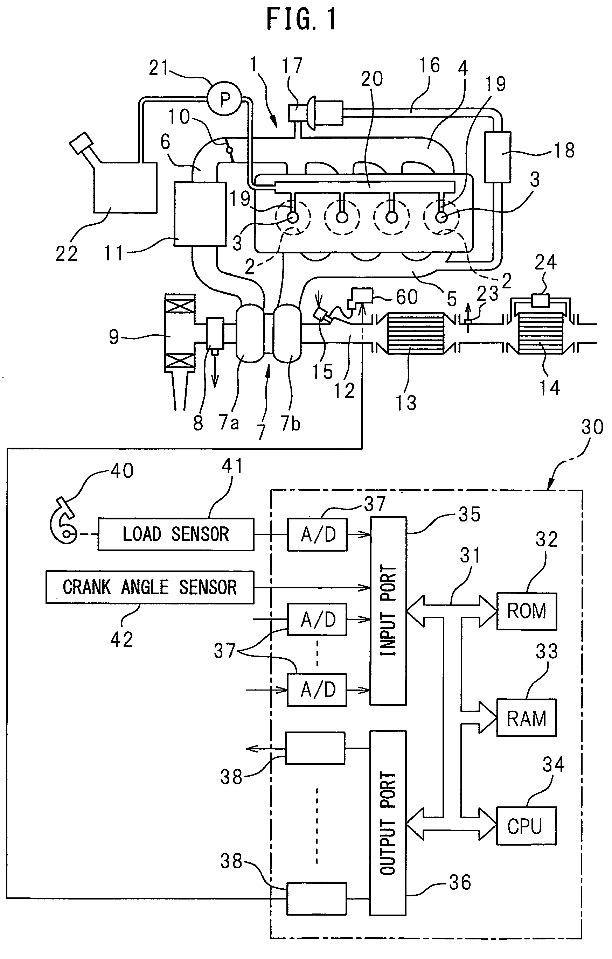

FIG. 1 is an overall view of a compression ignition type internal combustion engine.
Referring to FIG. 1, 1 indicates an engine body, 2 a combustion chamber of each cylinder, 3 an electronically controlled fuel injector for injecting fuel into each combustion chamber 2, 4 an intake manifold, and 5 an exhaust manifold.

The intake manifold 4 is connected through an intake duct 6 to an outlet of a compressor 7a of an exhaust turbocharger 7, while an inlet of the compressor 7a is connected through an intake air amount detector 8 to an air cleaner 9. Inside the intake duct 6, a throttle valve 10 which is driven by an actuator is arranged. Around the intake duct 6, a cooling device 11 is arranged for cooling the intake air which flows through the inside of the intake duct 6. In the embodiment which is shown in FIG. 1, the engine cooling water is guided to the inside of the cooling device 11 where the engine cooling water is used to cool the intake air.

On the other hand, the exhaust manifold 5 is connected to an inlet of an exhaust turbine 7b of the exhaust turbocharger 7, and an outlet of the exhaust turbine 7b is connected through an exhaust pipe 12 to an inlet of an exhaust purification catalyst 13. In an embodiment of the present invention, this exhaust purification catalyst 13 is comprised of an $NO_x$ storage catalyst. An outlet of the exhaust purification catalyst 13 is connected to a particulate filter 14 and, upstream of the exhaust purification catalyst 13 inside the exhaust pipe 12, a hydrocarbon feed valve 15 is arranged for feeding hydrocarbons comprised of diesel oil or other fuel used as fuel for a compression ignition type internal combustion engine. In the embodiment shown in FIG. 1, diesel oil is used as the hydrocarbons which are fed from the hydrocarbon feed valve 15. Note that, the present invention can also be applied to a spark ignition type internal combustion engine in which fuel is burned under a lean air-fuel ratio. In this case, from the hydrocarbon feed valve 15, hydrocarbons comprised of gasoline or other fuel used as fuel of a spark ignition type internal combustion engine are fed.

On the other hand, the exhaust manifold 5 and the intake manifold 4 are connected with each other through an exhaust gas recirculation (hereinafter referred to as an "EGR") passage 16. Inside the EGR passage 16, an electronically controlled EGR control valve 17 is arranged. Further, around the EGR passage 16, a cooling device 18 is arranged for cooling the EGR gas which flows through the inside of the EGR passage 16. In the embodiment which is shown in FIG. 1, the engine cooling water is guided to the inside of the cooling device 18 where the engine cooling water is used to cool the EGR gas. On the other hand, each fuel injector 3 is connected through a fuel feed tube 19 to a common rail 20. This common rail 20 is connected through an electronically controlled variable discharge fuel pump 21 to a fuel tank 22. The fuel which is stored inside of the fuel tank 22 is fed by the fuel pump 21 to the inside of the common rail 20. The fuel which is fed to the inside of the common rail 21 is fed through each fuel feed tube 19 to the fuel injector 3.

An electronic control unit 30 is comprised of a digital computer provided with a ROM (read only memory) 32, a RAM (random access memory) 33, a CPU (microprocessor) 34, an input port 35, and an output port 36, which are connected with each other by a bidirectional bus 31. Downstream of the exhaust purification catalyst 13, a temperature sensor 23 is arranged for detecting the temperature of the exhaust gas flowing out from the exhaust purification catalyst 13, and a pressure difference sensor 24 for detecting a pressure difference before and after the particulate filter 14 is attached to the particulate filter 14. The output signals of these temperature sensor 23, pressure difference sensor 24 and intake air amount detector 8 are input through respectively corresponding AD converters 37 to the input port 35. Further, an accelerator pedal 40 has a load sensor 41 connected to it which generates an output voltage proportional to the amount of depression L of the accelerator pedal 40. The output voltage of the load sensor 41 is input through a corresponding AD converter 37 to the input port 35. Furthermore, at the input port 35, a crank angle sensor 42 is connected which generates an output pulse every time a crankshaft rotates by, for example, 15°. On the other hand, the output port 36 is connected through corresponding drive circuits 38 to each fuel injector 3, the actuator for driving the throttle valve 10, hydrocarbon feed valve 15, EGR control valve 17, and fuel pump 21.

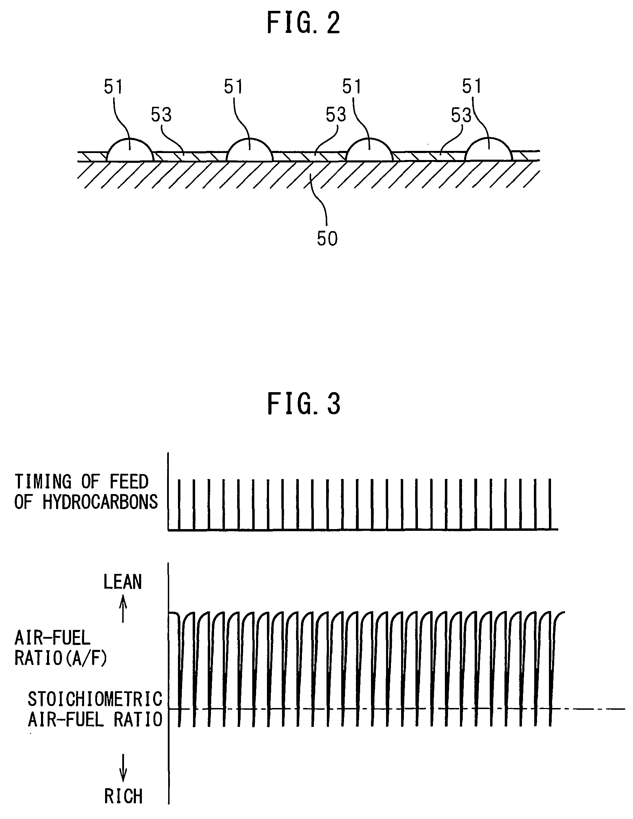

FIG. 2 schematically shows a surface part of a catalyst carrier which is carried on a substrate of the exhaust purification catalyst 13 shown in FIG. 1. At this exhaust purification catalyst 13, as shown in FIG. 2, for example, there is provided a catalyst carrier 50 made of alumina on which precious metal catalysts 51 comprised of platinum Pt are carried. Furthermore, on this catalyst carrier 50, a basic layer 53 is formed which includes at least one element selected from potassium K, sodium Na, cesium Cs, or another such alkali metal, barium Ba, calcium Ca, or another such alkali earth metal, a lanthanide or another such rare earth and silver Ag, copper Cu, iron Fe, iridium Ir, or another metal able to donate electrons to $NO_x$. In this case, on the catalyst carrier 50 of the exhaust purification catalyst 13, in addition to platinum Pt, rhodium Rh or palladium Pd may be further carried.

FIG. 3 shows the feed timing of hydrocarbons from the hydrocarbon feed valve 15 to remove $NO_x$ and the change in the air-fuel ratio (A/F) of the exhaust gas which flows into the exhaust purification catalyst 13. According to a research relating to $NO_x$ purification for a long time by the present applicant, it is learned that if making the air-fuel ratio (A/F) of the exhaust gas which flows into the exhaust purification catalyst 13 rich within a predetermined range of period as shown in FIG. 3, a high $NO_x$ purification rate is obtained. Furthermore, it is learned that at this time, a large amount of reducing intermediates which contain nitrogen and hydrocarbons continues to be held or adsorbed on the surface of the basic layer 53, and the reducing intermediates play a central role in obtaining a high $NO_x$ purification rate.

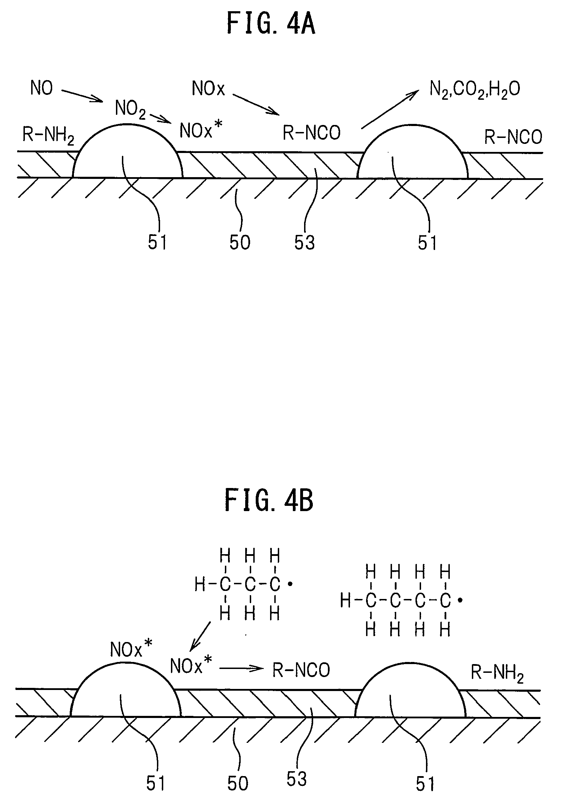

Next, this will be explained in brief with reference to FIGS. 4A and 4B. Note that, these FIGS. 4A and 4B schematically show the surface part of the catalyst carrier 50 of the exhaust purification catalyst 13. These FIGS. 4A and 4B show the reaction which is presumed to occur when the air-fuel ratio (A/F) of the exhaust gas flowing into the exhaust purification catalyst 13 is made rich within a predetermined range of period. Note that, in these FIGS. 4A and 4B, FIG. 4A shows when the air-fuel ratio (A/F) of the exhaust gas flowing into the exhaust purification catalyst 13 is made lean, while FIG. 4B shows when hydrocarbons are fed from the hydrocarbon feed valve 15 and the air-fuel ratio (A/F) of the exhaust gas flowing into the exhaust purification catalyst 13 is made rich.

Now, as will be understood from FIG. 3, the air-fuel ratio of the exhaust gas which flows into the exhaust purification catalyst 13 is maintained lean except for an instant, so the exhaust gas which flows into the exhaust purification catalyst 13 normally becomes a state of oxygen excess. At this time, part of the NO which is contained in the exhaust gas deposits on the exhaust purification catalyst 13, while part of the NO which is contained in the exhaust gas, as shown in FIG. 4A, is oxidized on the platinum 51 and becomes $NO_2$. Next, this $NO_2$ is further oxidized and becomes $NO_3$. Further, part of the $NO_2$ becomes $NO_2^-$. Therefore, on the platinum Pt 51, $NO_2^-$ and $NO_3$ are produced. The NO which is deposited on the exhaust purification catalyst 13 and the $NO_2^-$ and $NO_3$ which are formed on the platinum Pt 51 are strong in activity. Therefore, below, these NO, $NO_2^-$, and $NO_3$ will be referred to as the "active $NO_x^*$".

Next, if hydrocarbons are fed from the hydrocarbon feed valve 15 and the air-fuel ratio (A/F) of the exhaust gas flowing into the exhaust purification catalyst 13 is made rich, the majority of the hydrocarbons successively react with oxygen and are burned, and a part of the hydrocarbons are successively partially oxidized and become the radical hydrocarbons. The radical hydrocarbons react on the platinum 51 with the active $NO_x^*$ to thereby form the reducing intermediates. The reducing intermediates are adhered or adsorbed on the surface of the basic layer 53. Note that, the majority of the reducing intermediates which are held or adsorbed on the surface of the basic layer 53 at this time is believed to be the isocyanate compound R-NCO and amine compound $R-NH_2$.

Next, if the air-fuel ratio (A/F) of the exhaust gas flowing into the exhaust purification catalyst 13 is made lean again, $NO_x$ contained in the exhaust gas reacts with the reducing intermediates R-NCO and $R-NH_2$ held or adsorbed on the surface of the basic layer 53 and are converted to $N_2$, $CO_2$, and $H_2O$ as shown in FIG. 4A. In this way, $NO_x$ contained in the exhaust gas is removed by the reducing intermediates which are produced when hydrocarbons are injected from the hydrocarbon feed valve 15 and which are held or adsorbed on the surface of the basic layer 53. Accordingly, to remove $NO_x$ well, it is necessary to produce a sufficient amount of the reducing intermediates to remove $NO_x$ and make the produced reducing intermediates be held or adsorbed on the surface of the basic layer 53.

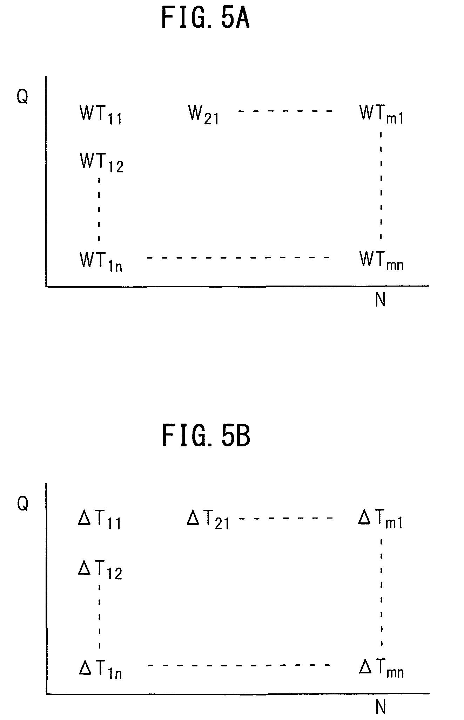

On the other hand, the produced reducing intermediates are consumed to remove $NO_x$ contained in the exhaust gas and, accordingly, the amount of the reducing intermediates are gradually reduced as a time elapses after hydrocarbons are injected. Accordingly, it is necessary to inject the next hydrocarbons from the hydrocarbon feed valve 15 during the time in which a sufficient amount of the reducing intermediates to remove $NO_x$ are held or adsorbed on the surface of the basic layer 53. In an embodiment according to the present invention, the hydrocarbon injection amount WT which is able to produce a sufficient amount of the reducing intermediates to remove $NO_x$ is stored as a function of the injection amount Q from fuel injectors 3 and the engine speed N in the form of a map such as shown in FIG. 5A in advance in the ROM 32. Further, the optimum injection period ΔT of the hydrocarbons which is able to obtain a good $NO_x$ purification action is also stored as a function of the injection amount Q from the fuel injectors 3 and the engine speed N in the form of a map such as shown in FIG. 5B in advance in the ROM 32.

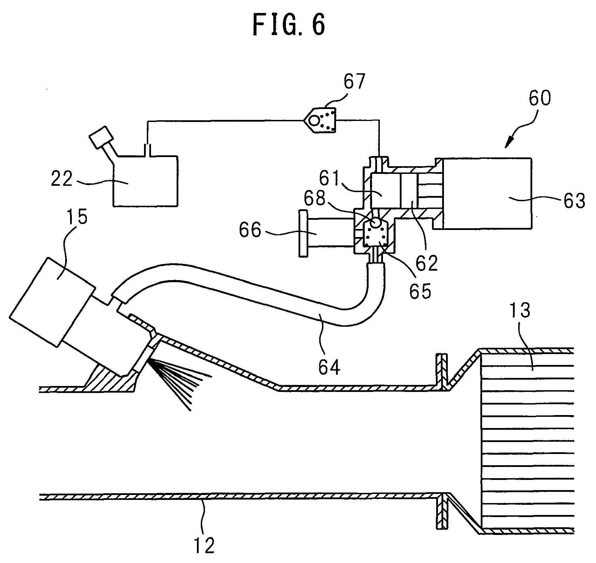

Now, returning again to FIG. 1, FIG. 1 shows a hydrocarbon feed device 60 for feeding hydrocarbons, that is, fuel, to the hydrocarbon feed valve 15. As shown in FIG. 1, this hydrocarbon feed device 60 is connected through the drive circuit 38 to the output port 36. In an embodiment of the present invention, this hydrocarbon feed device 60 is comprised of an electric pump. FIG. 6 shows an enlarged view of this hydrocarbon feed device 60, that is, the electric pump. As shown in FIG. 6, the hydrocarbon feed device 60, that is, the electric pump, is provided with a pump chamber 61 which is filled with pressurized fuel, a pressurizing piston 62 for pressurizing the fuel inside the pump chamber 61, a solenoid 63 for driving the pressurizing piston 62, a pressurized fuel outflow chamber 65 which is connected through a fuel feed pipe 64 to the hydrocarbon feed valve 15, and a pressure sensor 66 for detecting the fuel pressure inside of the pressurized fuel outflow chamber 65. The pump chamber 61 on the one hand is connected to the fuel tank 22 through a check valve 67 which allows only flow from the fuel tank 22 toward the pump chamber 61 and on the other hand is connected to the pressurized fuel outflow chamber 65 through a check valve 68 which allows only flow from the pump chamber 61 toward the pressurized fuel outflow chamber 65.

If the solenoid 63 of the hydrocarbon feed device 60, that is, the electric pump, is excited, the pressurizing piston 62 is made to move in FIG. 6 to the left toward the pump chamber 61. At this time, the fuel inside of the pump chamber 61 is pressurized and the pressurized fuel is fed out through the check valve 68 to the inside of the pressurized fuel outflow chamber 65. Next, this fuel is fed to the hydrocarbon feed valve 15. On the other hand, if the solenoid 63 is deenergized, the pressurizing piston 62 is made to move in FIG. 6 to the right. At this time, the fuel inside the fuel tank 22 is fed in through the check valve 67 to the pump chamber 61. The fuel which is fed to the hydrocarbon feed valve 15, that is, the hydrocarbons, is injected from the nozzle port of the hydrocarbon feed valve 15 to the inside of the exhaust gas.

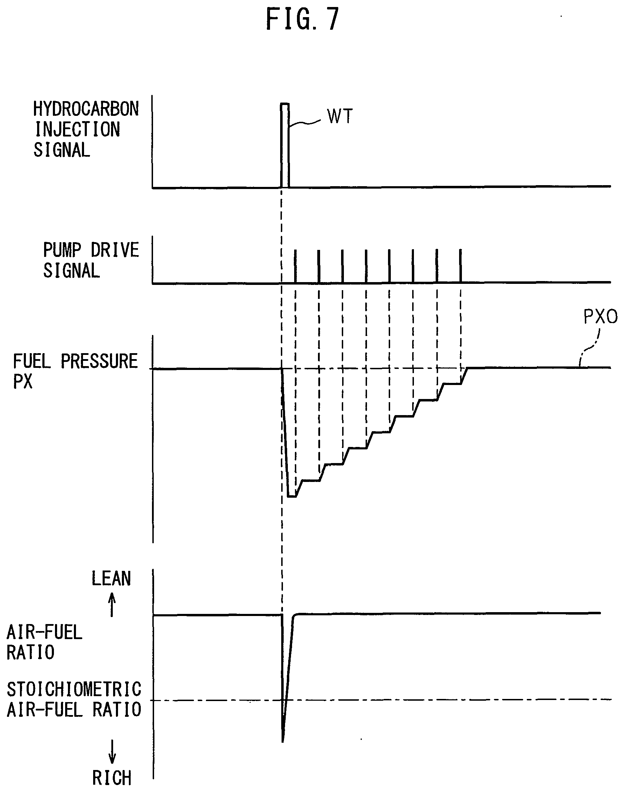

FIG. 7 shows a hydrocarbon injection signal from the hydrocarbon feed valve 15, a pump drive signal for exciting the solenoid 63 to drive the pressurizing piston 62, a change of the fuel pressure PX of fuel fed to the hydrocarbon feed valve 15, that is, the injection pressure PX of the hydrocarbon feed valve 15, and a change of the air-fuel ratio of the exhaust gas which flows into the exhaust purification catalyst 13 when an $NO_x$ removal action is being performed by injecting hydrocarbons from the hydrocarbon feed valve 15. Note that, the injection pressure PX of the hydrocarbon feed valve 15 is equal to the fuel pressure inside the hydrocarbon feed valve 15, that is, the fuel pressure inside the fuel feed pipe 64. The injection pressure PX of the hydrocarbon feed valve 15 is constantly detected by the pressure sensor 66. As shown in FIG. 7, if a hydrocarbon injection signal is issued, the hydrocarbon feed valve 15 is made to open whereby hydrocarbons are injected from the hydrocarbon feed valve 15. Note that, at this time, hydrocarbons are injected from the hydrocarbon feed valve 15 by an injection amount WT which is calculated from the map which is shown in FIG. 5A. If hydrocarbons are injected from the hydrocarbon feed valve 15, as shown in FIG. 7, the injection pressure PX of the hydrocarbon feed valve 15 rapidly falls.

If the injection pressure PX of the hydrocarbon feed valve 15 falls, the pump drive signal is made to be generated at equal intervals. If the pump drive signal is generated, the solenoid 63 is excited and the fuel in the pump chamber 61 is pressurized by the pressurizing piston 62 whereby, as shown in FIG. 7, the injection pressure PX of the hydrocarbon feed valve 15 rises just a bit. Next, the injection pressure PX, as shown in FIG. 7, is made to increase a little at a time every time the pump drive signal is generated until the target standard injection pressure PXO. If the injection pressure PX reaches the target standard injection pressure PXO, the pump drive signal stops being generated and as a result the injection pressure PX of the hydrocarbon feed valve 15 is maintained at the target standard injection pressure PXO. This target standard injection pressure PXO is determined in advance to give the optimum injection rate for removal of $NO_x$.

Now then, as will be understood from FIG. 6, the hydrocarbon feed device 60 has the function of feeding hydrocarbons to the inside of the hydrocarbon feed valve 15, but does not have the function of causing the hydrocarbons in the hydrocarbon feed valve 15 to overflow from the inside of the hydrocarbon feed valve 15. "The hydrocarbon feed device 60 does not have the function of causing the hydrocarbons in the hydrocarbon feed valve 15 to overflow from the inside of the hydrocarbon feed valve 15" means the hydrocarbon feed device 60 does not have the function of causing the injection pressure of the hydrocarbon feed valve 15 to drop. That is, the hydrocarbon feed device 60 which is used in the present invention has the function of making the injection pressure of the hydrocarbon feed valve 15 increase, but does not have the function of making it decrease.

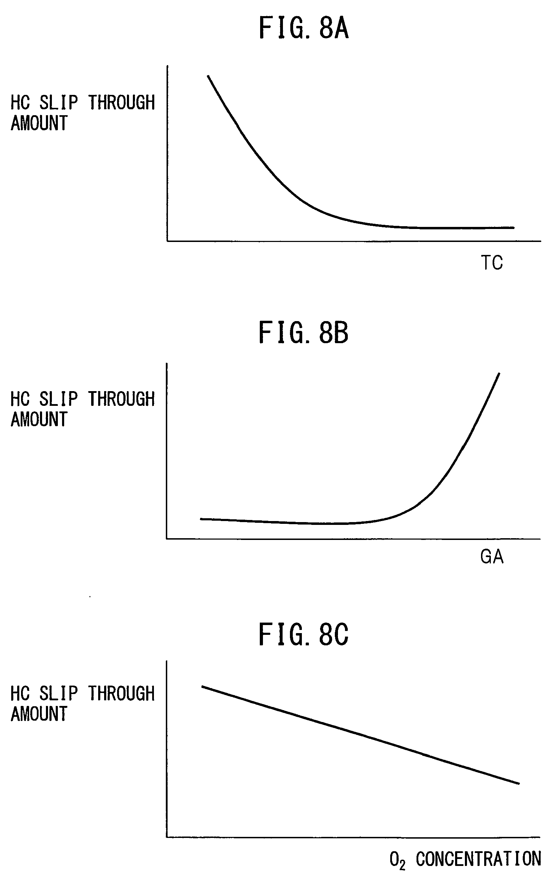

Now then, in an embodiment of the present invention, hydrocarbons are injected from the hydrocarbon feed valve 15 in the state where the injection pressure PX of the hydrocarbon feed valve 15 is made the target standard injection pressure PXO. At this time, the majority of the hydrocarbons which are injected from the hydrocarbon feed valve 15 are used for consuming oxygen, while the remaining hydrocarbons are used for generating a reducing intermediate. That is, all of the hydrocarbons injected from the hydrocarbon feed valve 15 are consumed in the exhaust purification catalyst 13. Therefore, usually, hydrocarbons never slip through the inside of the exhaust purification catalyst 13. However, if the reactivity of the hydrocarbons at the exhaust purification catalyst 13 falls, the danger arises of the hydrocarbons slipping through the exhaust purification catalyst 13. For example, when the temperature of the exhaust purification catalyst 13 is low, the activity of the exhaust purification catalyst 13 is low. Accordingly, the amount of hydrocarbons which react with oxygen and are consumed per unit time decreases, and the amount of hydrocarbons which are consumed per unit time for generating the reducing intermediate decreases. That is, if the temperature of the exhaust purification catalyst 13 becomes lower, the amount of hydrocarbons which are treated at the exhaust purification catalyst 13 per unit time decreases. As a result, as shown in FIG. 8A, if the temperature of the exhaust purification catalyst 13 falls, the amount of hydrocarbons (HC) which slip through the exhaust purification catalyst 13 increases.

On the other hand, if the flow rate of the exhaust gas becomes greater, the contact time between the hydrocarbons injected into the exhaust gas and the exhaust purification catalyst 13 becomes shorter, so the amount of hydrocarbons which are treated at the exhaust purification catalyst 13 per unit time decreases. Therefore, as shown in FIG. 8B, if the flow rate GA of the exhaust gas increases, the amount of hydrocarbons (HC) which slip through the exhaust purification catalyst 13 increases. Further, if the concentration of oxygen ($O_2$) in the exhaust gas becomes lower, the amount of hydrocarbons which react with oxygen and are consumed per unit time decreases and the amount of hydrocarbons which are treated per unit time in the exhaust purification catalyst 13 decreases. Therefore, as shown in FIG. 8C, if the concentration of oxygen ($O_2$) in the exhaust gas becomes lower, the amount of hydrocarbons (HC) which slip through the exhaust purification catalyst 13 increases.

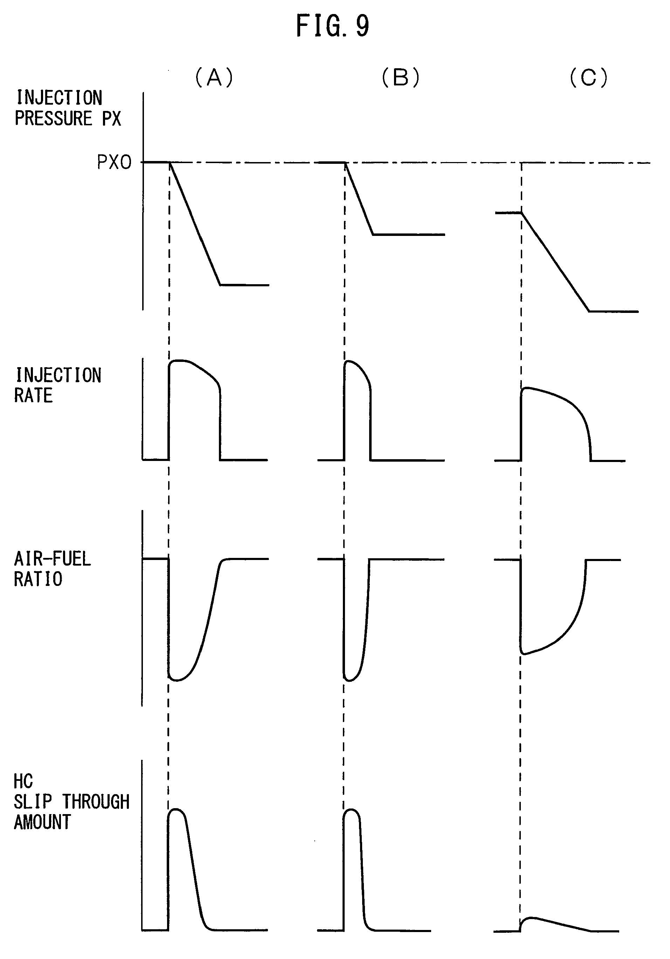

If the amount of slip through of hydrocarbons at the exhaust purification catalyst 13 increases, not only does the problem arise of the exhaust emissions deteriorating, but also the problem arises that if the amount of slip through of hydrocarbons increases, white smoke is produced. Therefore, it is necessary to prevent hydrocarbons from slipping through the exhaust purification catalyst 13 as much as possible. In this case, even if decreasing the injection amount of hydrocarbons from the hydrocarbon feed valve 15, it is not possible to prevent slip through of hydrocarbons. To prevent slip through of hydrocarbons, it is necessary to lower the injection pressure of the hydrocarbon feed valve 15. Next, this will be explained with reference to FIG. 9. Note that, FIG. 9 shows changes along with time of the injection pressure PX of the hydrocarbon feed valve 15, the injection rate of hydrocarbons, the air-fuel ratio of the exhaust gas which flows into the exhaust purification catalyst 13, and the amount of slip through of hydrocarbons.

Referring to FIG. 9, (A) shows the case where when the injection pressure PX of the hydrocarbon feed valve 15 is the target standard injection pressure PXO, the amount of hydrocarbons which are treated in the exhaust purification catalyst 13 per unit time decreases and thereby the amount of slip through of hydrocarbons (HC) increases. When, in this way, the amount of slip through of hydrocarbons (HC) increases, FIG. 9(B) shows the case of shortening the injection time to reduce the total injection amount of hydrocarbons so as to reduce the amount of slip through of hydrocarbons (HC), while FIG. 9(C) shows the case of reducing the injection pressure PX of the hydrocarbon feed valve 15 so as to reduce the amount of slip through of hydrocarbons (HC). As shown in FIG. 9(B), even if shortening the injection time in the state where the injection pressure PX of the hydrocarbon feed valve 15 is maintained at the target standard injection pressure PXO, the injection amount per unit time does not decrease, so the hydrocarbons injected from the hydrocarbon feed valve 15 cannot be completely treated at the exhaust purification catalyst 13. Therefore, in this case, as shown in FIG. 9(B), a large amount of hydrocarbons slips through.

As opposed to this, as shown in FIG. 9(C), if lowering the injection pressure PX of the hydrocarbon feed valve 15, the injection amount per unit time decreases, so almost all of the hydrocarbons injected from the hydrocarbon feed valve 15 are treated at the exhaust purification catalyst 13. Therefore, in this case, as shown in FIG. 9(C), almost no hydrocarbons slip through. Further, in the case which is shown in FIG. 9(B), the total amount of the injection amount has to be decreased, but in the case which is shown in FIG. 9(C), there is the advantage that the total amount of the injection amount can be maintained at the same amount without reduction. Therefore, in the present invention, when the amount of hydrocarbons which can be treated at the exhaust purification catalyst 13 per unit time decreases, as shown in FIG. 9(C), the injection pressure PX of the hydrocarbon feed valve 15 is lowered from the target standard injection pressure PXO.

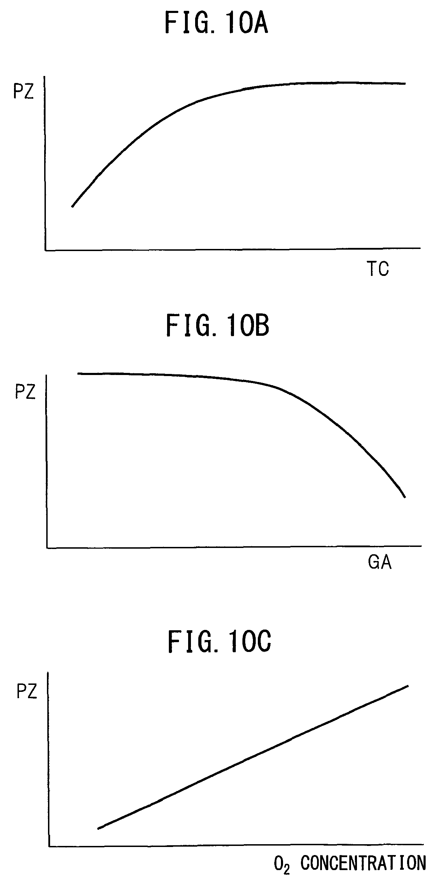

By what extent the injection pressure PX of the hydrocarbon feed valve 15 should be lowered from the target standard injection pressure PXO so that no slip through of hydrocarbons occurs when the amount of hydrocarbons which can be treated at the exhaust purification catalyst 13 per unit time decreases can be found by experiments. In the present invention, the upper limit of the injection pressure PX which causes slip through of hydrocarbons when the amount of hydrocarbons which can be treated at the exhaust purification catalyst 13 per unit time decreases is called the "limit injection pressure PZ, and the injection pressure PX of the hydrocarbon feed valve 15 is controlled based on this limit injection pressure PZ so that no slip through of hydrocarbons occurs. Therefore, first, referring to FIGS. 10A, 10B, and 10C, this limit injection pressure PZ will be explained.

Now then, if the amount of slip through of hydrocarbons increases, the limit injection pressure PZ changes in a direction which suppresses slip through of hydrocarbons, that is, a falling direction. Therefore, the trends of the limit injection pressure PZ which are shown in FIGS. 10A, 10B, and 10C become trends opposite to the trends in the amount of slip through of hydrocarbons which are shown in FIGS. 8A, 8B, and 8C. That is, when the temperature of the exhaust purification catalyst 13 is low, the activity of the exhaust purification catalyst 13 is low and, therefore, if the temperature of the exhaust purification catalyst 13 becomes low, the amount of hydrocarbons which are treated at the exhaust purification catalyst 13 per unit time decreases. Therefore, as shown in FIG. 10A, the limit injection pressure PZ falls as the temperature TC of the exhaust purification catalyst 13 falls so that no slip through of hydrocarbons occurs.

On the other hand, if the flow rate of the exhaust gas becomes greater, the contact time between the hydrocarbons injected into the exhaust gas and the exhaust purification catalyst 13 becomes shorter, so the amount of hydrocarbons which are treated in the exhaust purification catalyst 13 per unit time decreases. Therefore, as shown in FIG. 10B, as the flow rate GA of the exhaust gas increases, the limit injection pressure PZ falls so that slip through of hydrocarbons does not occur. Further, if the concentration of oxygen ($O_2$) in the exhaust gas becomes lower, the amount of hydrocarbons which react with the oxygen and are consumed per unit time decreases and the amount of hydrocarbons treated at the exhaust purification catalyst 13 per unit time decreases. Therefore, as shown in FIG. 10C, as the concentration of oxygen ($O_2$) in the exhaust gas becomes lower, the limit injection pressure PZ falls so that slip through of hydrocarbons does not occur.

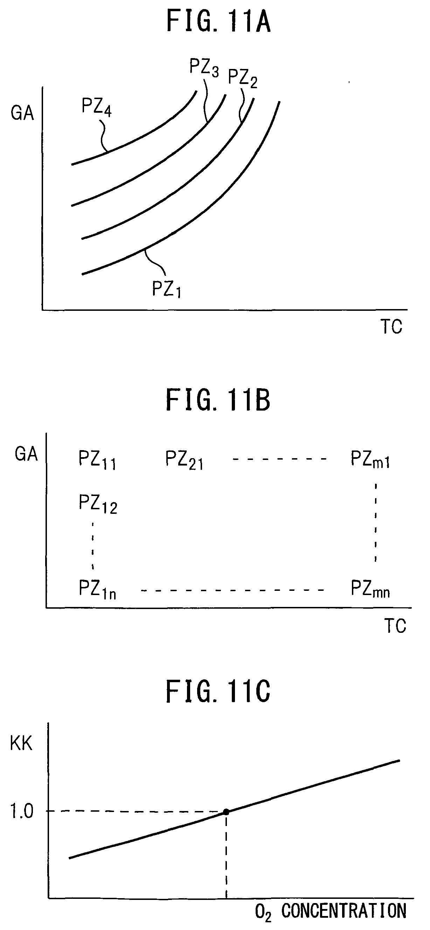

FIG. 11A shows the limit injection pressure PZ with respect to the temperature TC of the exhaust purification catalyst 13 and the flow rate GA of the exhaust gas. Note that, in FIG. 11A, the limit injection pressure PZ gradually becomes lower from $PZ_1$ toward $PZ_4$. Therefore, from FIG. 11A, it is learned that when the temperature TC of the exhaust purification catalyst 13 is low and the flow rate GA of the exhaust gas is large, the limit injection pressure PZ becomes the lowest. The value of the limit injection pressure PZ shown in FIG. 11A is stored as a function of the temperature TC of the exhaust purification catalyst 13 and the flow rate GA of the exhaust gas in the form of the map shown in FIG. 11B in advance in the ROM 32. In an embodiment of the present invention, the final limit injection pressure PZ is calculated by multiplying the limit injection pressure PZ calculated from the map shown in FIG. 11B with the correction coefficient KK which is shown in FIG. 11C. Note that, the value of the limit injection pressure PZ which is stored in the map shown in FIG. 11B is the value when the concentration of oxygen ($O_2$) in the exhaust gas is the value at the time of a predetermined reference concentration of oxygen ($O_2$) which is shown by the black dot in FIG. 11C. Note that, from FIG. 11C, it will be understood that the limit injection pressure PZ is lowered the lower the concentration of oxygen ($O_2$) in the exhaust gas.

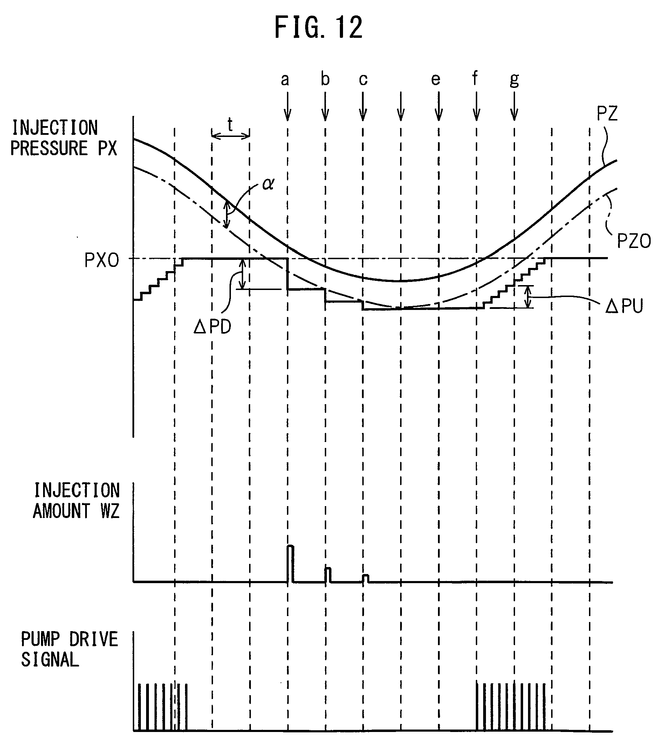

Now then, usually, the limit injection pressure PZ is considerably higher than the target standard injection pressure PXO of the hydrocarbon feed valve 15. Therefore, when hydrocarbons are periodically injected from the hydrocarbon feed valve 15 to remove the $NO_x$, usually, hydrocarbons are injected from the hydrocarbon feed valve 15 under the target standard injection pressure PXO. At this time, no slip through of hydrocarbons occurs at the exhaust purification catalyst 13. That is, usually, the problem of slip through of hydrocarbons does not occur. The problem of slip through of hydrocarbons occurs, for example, in case where the flow rate of the exhaust gas increases when the temperature TC of the exhaust purification catalyst 13 is low. In such a case, the limit injection pressure PZ temporarily falls. FIG. 12 shows a time chart when the limit injection pressure PZ temporarily falls in this way. Note that, FIG. 12 shows together the injection amount WZ of hydrocarbons from the hydrocarbon feed valve 15 and the pump drive signal for driving the pressurized piston 62 of the hydrocarbon feed device 60, that is, the electric pump. Next, while referring to this FIG. 12, the method of control of the injection pressure PX of the hydrocarbon feed valve 15 according to the present invention will be explained.

As explained up to here, when the injection pressure PX of the hydrocarbon feed valve 15 is higher than the limit injection pressure PZ, if hydrocarbons are injected from the hydrocarbon feed valve 15, slip through of hydrocarbons will occur. Therefore, in the present invention, to detect the fact that the limit injection pressure PZ falls and approaches the injection pressure PX of the hydrocarbon feed valve 15, an allowable injection pressure PZO is set separate from the limit injection pressure PZ. As will be understood from FIG. 12, this allowable injection pressure PZO is made an injection pressure which is lower than the limit injection pressure PZ by exactly a predetermined pressure $\alpha$. In the present invention, when the injection pressure PX of the hydrocarbon feed valve 15 exceeds this allowable injection pressure PZO, it is judged that there is the danger of slip through of hydrocarbons. At this time, the injection pressure PX of the hydrocarbon feed valve 15 is lowered so that slip through of hydrocarbons will not occur even if hydrocarbons are injected from the hydrocarbon feed valve 15 for removing $NO_x$.

In this regard, as explained above, the hydrocarbon feed device 60 which is used in the present invention has the function of increasing the injection pressure PX of the hydrocarbon feed valve 15, but does not have the function of decreasing it. Therefore, in the present invention, the hydrocarbon feed device 60 cannot be used to make the injection pressure PX of the hydrocarbon feed valve 15 fall. Therefore, in the present invention, when the injection pressure PX of the hydrocarbon feed valve 15 exceeds the allowable injection pressure PZO which is lower than the limit injection pressure PZ by exactly the predetermined pressure $\alpha$, hydrocarbons are injected from the hydrocarbon feed valve 15, whereby the injection pressure PX of the hydrocarbon feed valve 15 is made to fall.

Note that, in the present invention, hydrocarbons injected from the hydrocarbon feed valve 15 are used to remove the $NO_x$, that is, in the present invention, hydrocarbons are used as the reducing agent for removing the $NO_x$, but the present invention can also be applied to the case of using as the reducing agent for removing $NO_x$ a reducing agent other than hydrocarbons, for example, an aqueous urea solution. Therefore, expressing the present invention comprehensively, according to the present invention, in an exhaust purification system of an internal combustion engine comprising an exhaust purification catalyst which is arranged in an engine exhaust passage, a reducing agent feed valve which is arranged in the engine exhaust passage upstream of the exhaust purification catalyst, a reducing agent feed device for feeding a reducing agent to the reducing agent feed valve, and a reducing agent injection control device for controlling the injection action of the reducing agent from the reducing agent feed valve, wherein the reducing agent feed device has the function of making the injection pressure of the reducing agent feed valve increase, but does not have the function of making the injection pressure of the reducing agent feed valve decrease, and the injection pressure of the reducing agent feed valve has a limit injection pressure which causes slip through of the reducing agent in the exhaust purification catalyst when the reducing agent is injected from the reducing agent feed valve, characterized in that when the injection pressure of the reducing agent feed valve exceeds an allowable injection pressure which is lower than the limit injection pressure by exactly a predetermined pressure, the reducing agent is injected from the reducing agent feed valve, whereby the injection pressure of the reducing agent feed valve is made to fall.

Next, referring to FIG. 12, the method of control of the injection pressure PX of the hydrocarbon feed valve 15 will be explained a little more specifically. FIG. 12 shows as an example the case of controlling the injection pressure PX of the hydrocarbon feed valve 15 every fixed time "t" by the timing shown by the broken line. Now, in FIG. 12, if, at the time "a", the injection pressure PX of the hydrocarbon feed valve 15 exceeds the allowable injection pressure PZO, by injecting hydrocarbons from the hydrocarbon feed valve 15, the injection pressure PX of the hydrocarbon feed valve 15 is made to fall by exactly $\Delta$PD until an injection pressure not causing slip through of hydrocarbons, for example, even when hydrocarbons are injected from the hydrocarbon feed valve 15 for removing $NO_x$. This drop $\Delta$PD of the injection pressure PX of the hydrocarbon feed valve 15 is found by various methods. For example, it is possible to change the injection pressure PX of the hydrocarbon feed valve 15 in accordance with the speed of change of the limit injection pressure PZ and make the drop $\Delta$PD in the injection pressure PX of the hydrocarbon feed valve 15 greater the faster the speed of drop of the limit injection pressure PZ.

In this case, in the embodiment shown in FIG. 12, when it is judged that the injection pressure PX of the hydrocarbon feed valve 15 exceeds the allowable injection pressure PZO at the time "a", at the time "b" after a fixed time "t", the injection pressure PX of the hydrocarbon feed valve 15 is made to drop by exactly the drop $\Delta$PD whereby the injection pressure PX of the hydrocarbon feed valve 15 becomes lower than the allowable injection pressure PZO or the injection pressure PX of the hydrocarbon feed valve 15 becomes the allowable injection pressure PZO. In this case, in the embodiment of the present invention, the allowable injection pressure PZO at the time "b" after a fixed time "t" is predicted from the way of change of the limit injection pressure PZ. That is, in the embodiment of the present invention, when it is judged that the injection pressure PX of the hydrocarbon feed valve 15 exceeds the allowable injection pressure PZO at the time "a", the allowable injection pressure PZO at the time "b" after a fixed time "t" is predicted and hydrocarbons are injected from the hydrocarbon feed valve 15 so that the injection pressure PX of the hydrocarbon feed valve 15 becomes an injection pressure lower than the predicted allowable injection pressure PZO or the injection pressure PX of the hydrocarbon feed valve 15 becomes the allowable injection pressure PZO.

Note that, as explained above, the present invention can be applied even to the case of using as the reducing agent for removing the $NO_x$ a reducing agent other than hydrocarbons, for example, an aqueous urea solution. Therefore, if considering this, in the embodiment of the present invention, when the injection pressure of the reducing agent feed valve exceeds the allowable injection pressure, the allowable injection pressure after the elapse of a predetermined time is predicted and the reducing agent is injected from the reducing agent feed valve so that the injection pressure of the reducing agent feed valve becomes an injection pressure which is lower than this predicted allowable injection pressure or becomes this predicted allowable injection pressure.

In an embodiment of the present invention, such prediction of the injection pressure PX of the hydrocarbon feed valve 15 is performed in FIG. 12 every time "t". That is, at the time "b" as well, the allowable injection pressure PZO at the time "c" after a fixed time "t" is predicted. At this time as well, hydrocarbons are injected from the hydrocarbon feed valve 15 so that the injection pressure PX of the hydrocarbon feed valve 15 becomes an injection pressure lower than the predicted allowable injection pressure PZO or the injection pressure PX of the hydrocarbon feed valve 15 becomes the predicted allowable injection pressure PZO.

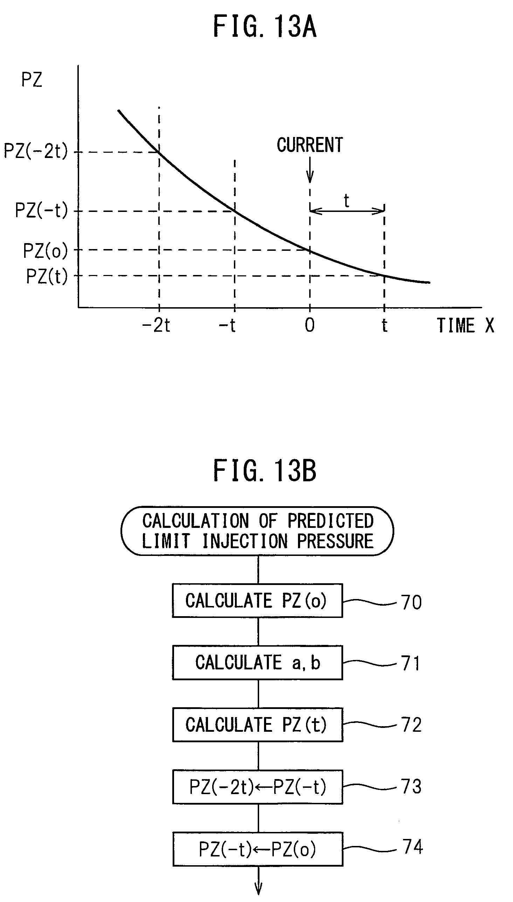

Next, one example of the method of prediction of the allowable injection pressure PZO after a fixed time "t" will be simply explained with reference to FIG. 13A. FIG. 13A shows the limit injection pressure PZ(-2t) at the time (-2t), the limit injection pressure PZ(-t) at the time (-t), and the limit injection pressure PZ(t) at the time (t) when making the current time "x" zero and making the limit injection pressure PZ at this time PZ(0). Here, the limit injection pressure PZ(t) at the time (t) shows the predicted limit injection pressure after a fixed time "t" from the present. Now then, here, if expressing the change PZ(x) along with time of the limit injection pressure PZ shown in FIG. 13A by the quadratic ($ax^2+bx+c$), the limit injection pressures PZ at the different times become as follows:

$$PZ(-2t)=4t^2a-2tb+c$$

$$PZ(-t)=t^2a-tb+c$$

$$PZ(0)=c$$

From these relationship, if expressing "a", "b", and "c" by PZ(-2t), PZ(-t), PZ(0), and "t", the results become as follows:

$$a=(PZ(-2t)-2PZ(-t)+PZ(0))/2t^2$$

$$b=(PZ(-2t)-4PZ(-t)+3PZ(0))/2t$$

$$c=PZ(0)$$

PZ(-2t), PZ(-t), and PZ(0) can be calculated and "t" is determined in advance, so from these, the following formula of the predicted limit injection pressure PZ(t) can be found: PZ(t)=$at^2+bt+c$

By subtracting a constant value $\alpha$ from this predicted limit injection pressure PZ(t), the predicted allowable injection pressure PZO is found.

FIG. 13B shows the routine for calculation of the predicted limit injection pressure PZ(t). Referring to FIG. 13B, first, at step 70, the current limit injection pressure PZ(0) is calculated by using FIGS. 11B and 11C. Next, at step 71, "a" and "b" are calculated from the above formula. Next, at step 72, the predicted limit injection pressure PZ(t) (=$at^2+bt+c$) is calculated. Next, at step 73, PZ(-t) is made PZ(-2t). Next, at step 74, PZ(0) is made PZ(-t).

Now then, if the predicted limit injection pressure PZ(t) is found, the allowable injection pressure PZO at that time is found, and hydrocarbons are injected from the hydrocarbon feed valve 15 so that the injection pressure PX of the hydrocarbon feed valve 15 becomes an injection pressure which is lower than this predicted allowable injection pressure PZO or the injection pressure PX of the hydrocarbon feed valve 15 becomes this predicted allowable injection pressure PZ. Specifically speaking, the injection amount WZ of hydrocarbons which is necessary for making the injection pressure PX of the hydrocarbon feed valve 15 an injection pressure which is lower than this predicted allowable injection pressure PZO or making the injection pressure PX of the hydrocarbon feed valve 15 this predicted allowable injection pressure PZO is calculated, and the injection time of hydrocarbons which is necessary for making this injection amount WZ be injected is calculated. From the hydrocarbon feed valve 15, hydrocarbons are injected in accordance with this injection time. At this time, an injection amount WZ of hydrocarbons is injected from the hydrocarbon feed valve 15.

In this regard, if the injection amount WZ at this time becomes greater, sometimes a problem arises. If considering this case, in an embodiment of the present invention, an allowable injection amount is set for this injection amount WZ. Specifically, in an embodiment of the present invention, for this allowable injection amount, the two amounts of the allowable injection amount WA and the allowable injection amount WB are set, and only when the injection amount WZ is less than these two allowable injection amount WA and allowable injection amount WB, the amount WZ of hydrocarbons are injected from the hydrocarbon feed valve 15. Therefore, next, these allowable injection amount WA and allowable injection amount WB will be successively explained.

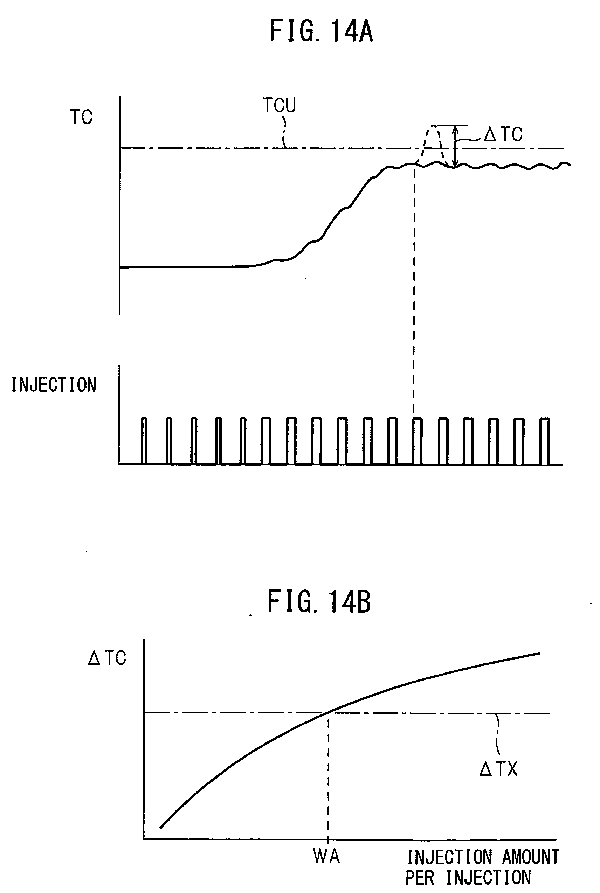

FIG. 14A shows the case where, to regenerate the particulate filter 14 or to release the stored $SO_x$ from the exhaust purification catalyst 13, the injection amount per injection of hydrocarbons from the hydrocarbon feed valve 15 is increased to thereby make the temperature TC of the exhaust purification catalyst 13 rise while removing $NO_x$. Note that, in these cases, the temperature TC of the exhaust purification catalyst 13 is made to rise to 600 to 650°C. Further, in FIG. 14A, TCU shows the limit temperature which causes heat deterioration of the exhaust purification catalyst 13. If the injection amount per injection of hydrocarbons from the hydrocarbon feed valve 15 is large, as shown in FIG. 14A by the broken line, the temperature TC of the exhaust purification catalyst 13 rapidly rises, that is, the amplitude ΔTC of the temperature TC of the exhaust purification catalyst 13 becomes large and, as a result, the temperature TC of the exhaust purification catalyst 13 ends up exceeding the limit temperature TCU. However, if the temperature TC of the exhaust purification catalyst 13 exceeds the limit temperature TCU, the exhaust purification catalyst 13 suffers from heat deterioration. Therefore, the temperature amplitude ΔTC has to be kept to a predetermined amplitude or less so that the temperature TC of the exhaust purification catalyst 13 does not exceed the limit temperature TCU. This predetermined amplitude is shown in FIG. 14B by ΔTX.

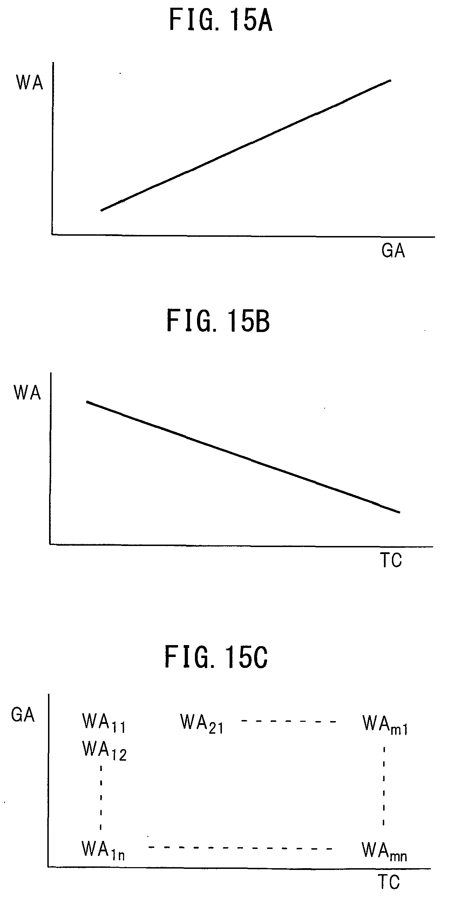

Note that, FIG. 14B shows the relationship between the injection amount per injection of hydrocarbons from the hydrocarbon feed valve 15 and the amplitude ΔTC of the temperature TC of the exhaust purification catalyst 13. As shown in FIG. 14B, the greater the injection amount per injection becomes, the greater the amplitude ΔTC of the temperature TC of the exhaust purification catalyst 13. In FIG. 14B, WA shows the allowable injection amount by which the amplitude ΔTC of the temperature TC of the exhaust purification catalyst 13 becomes the above-mentioned predetermined amplitude ΔTX. If the injection amount per injection of hydrocarbons becomes smaller than this allowable injection amount WA, the amplitude ΔTC of the temperature TC of the exhaust purification catalyst 13 is kept down to the amplitude ΔTX or less. Therefore, this allowable injection amount WA can be said to be the injection amount by which the raised temperature of the exhaust purification catalyst 13 due to injection of hydrocarbons, that is, the reducing agent, can be kept to a predetermined temperature or less. In an embodiment of the present invention, the injection amount WZ of hydrocarbons is controlled so as not to exceed this allowable injection amount WA. As shown in FIG. 15A, the allowable injection amount WA becomes greater the greater the flow rate GA of the exhaust gas, while, as shown in FIG. 15B, the allowable injection amount WA becomes smaller the higher the temperature TC of the exhaust purification catalyst 13. This allowable injection amount WA is stored as a function of the temperature TC of the exhaust purification catalyst 13 and the flow rate GA of the exhaust gas in the form of the map shown in FIG. 15C in advance in the ROM 32.

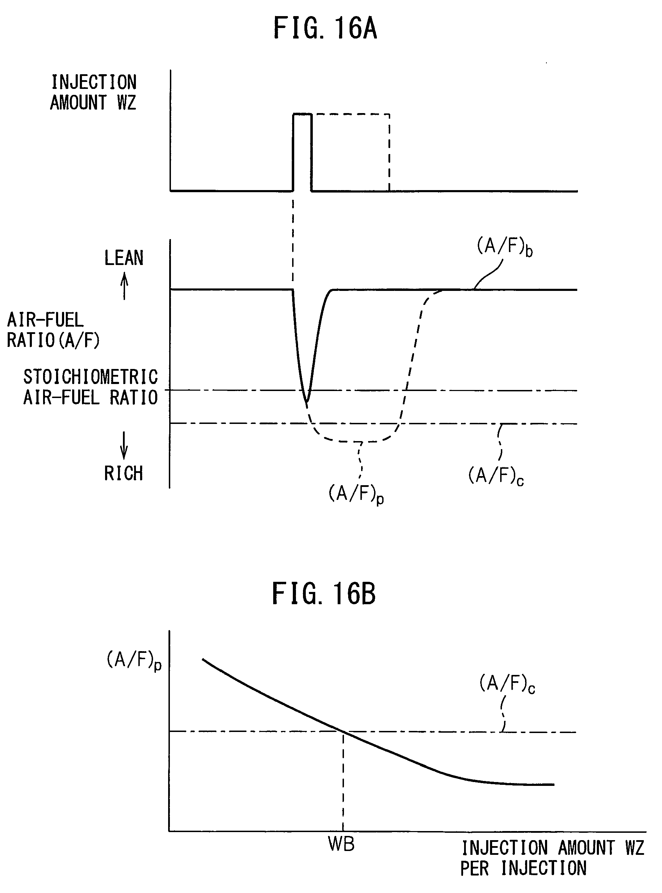

On the other hand, FIG. 16A shows the injection amount WZ of hydrocarbons which are injected when making the injection pressure PX of the hydrocarbon feed valve 15 fall to an injection pressure lower than the predicted allowable injection pressure PZO or when making the injection pressure PX of the hydrocarbon feed valve 15 fall to the predicted allowable injection pressure PZO and the change in the air-fuel ratio (A/F) of the exhaust gas which flows into the exhaust purification catalyst 13. Note that, in FIG. 16A, (A/F)b shows the base air-fuel ratio, while (A/F)c shows the limit rich air-fuel ratio at which slip through of hydrocarbons occurs. On the other hand, FIG. 16B shows the relationship between the injection amount WZ per injection of hydrocarbons from the hydrocarbon feed valve 15 and the peak air-fuel ratio (A/F)p of the exhaust gas which flows into the exhaust purification catalyst 13. Now then, if referring to FIG. 16A, in FIG. 16A, the case where the injection amount WZ of hydrocarbons is large is shown by the broken line, while the case where the injection amount WZ of hydrocarbons is reduced is shown by the solid line. As will be understood from the solid line of FIG. 16A, if making the injection amount WZ of hydrocarbons decrease, the air-fuel ratio (A/F) of the exhaust gas starts to return toward the base air-fuel ratio (A/F)b before falling down to the peak air-fuel ratio (A/F)p shown by the broken line, therefore the peak air-fuel ratio (A/F)p of the exhaust gas becomes higher. Therefore, as shown in FIG.

16B, the peak air-fuel ratio (A/F)p of the exhaust gas which flows into the exhaust purification catalyst 13 becomes higher if the injection amount WZ per injection becomes smaller.

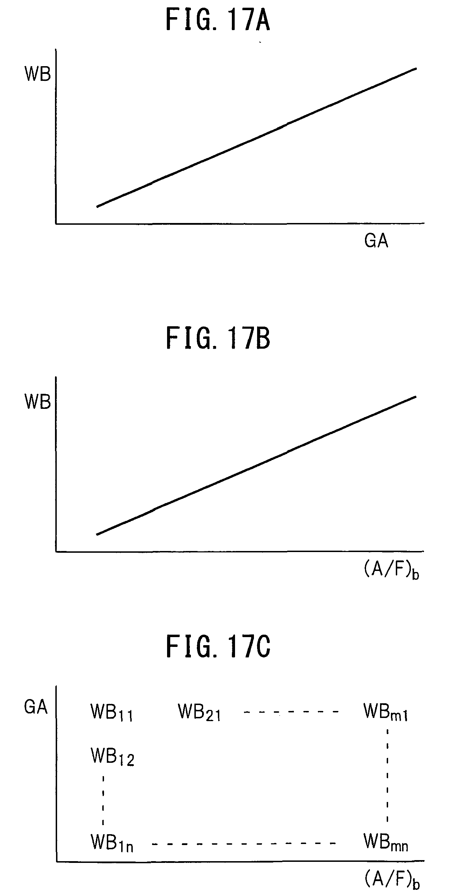

In FIG. 16B, WB shows the allowable injection amount by which the peak air-fuel ratio (A/F)p of the exhaust gas which flows into the exhaust purification catalyst 13 becomes the limit rich air-fuel ratio (A/F)c causing slip through of hydrocarbons. If making the injection amount WZ of hydrocarbons smaller than this allowable injection amount WB, the peak air-fuel ratio (A/F)p of the exhaust gas which flows into the exhaust purification catalyst 13 can be kept from falling to the limit rich air-fuel ratio (A/F)c or less. Therefore, this allowable injection amount WB can be said to be the injection amount which enables the air-fuel ratio of the exhaust gas which flows out from the exhaust purification catalyst 13 to be kept from falling below a predetermined air-fuel ratio. In the embodiment of the present invention, the injection amount WZ of hydrocarbons is controlled so as not to exceed this allowable injection amount WB. As shown in FIG. 17A, the allowable injection amount WB becomes greater the greater the flow rate GA of the exhaust gas, while as shown in FIG. 17B, the allowable injection amount WA becomes greater the higher the base air-fuel ratio (A/F)b. This allowable injection amount WB is stored as a function of the base air-fuel ratio (A/F)b and the flow rate GA of the exhaust gas in the form of the map shown in FIG. 17C in advance in the ROM 32.

In this way, in the embodiment of the present invention, when the injection amount WZ is smaller than the allowable injection amounts WA and WB, hydrocarbons are injected in the injection amount WZ from the hydrocarbon feed valve 15, while when the injection amount WZ is greater than the allowable injection amounts WA and WB, hydrocarbons are injected from the hydrocarbon feed valve 15 in an allowable injection amount of the smaller of the allowable injection amount WA and the allowable injection amount WB. That is, in the embodiment of the present invention, if considering even the case where a reducing agent other than hydrocarbons is used, when the injection pressure of the reducing agent feed valve exceeds the allowable injection pressure, the allowable injection pressure after the elapse of a predetermined time is predicted, the reducing agent feed amount which is required for making the injection pressure of the reducing agent feed valve fall to an injection pressure lower than the predicted allowable injection pressure or down to the predicted allowable injection pressure is calculated, and, when this reducing agent feed amount is smaller than a predetermined allowable injection amount, the reducing agent is injected in this reducing agent feed amount from the reducing agent feed valve.

Next, control of the injection pressure PX when the limit injection pressure PZ temporarily drops, then the limit injection pressure PZ rises will be explained. In the present invention, when the limit injection pressure PZ rises, that is, when the allowable injection pressure PZO rises, the pump drive signal is made to be issued for driving the pressurizing piston 62 of the hydrocarbon feed device 60. Due to this, the injection pressure PX of the hydrocarbon feed valve 15 is made to rise. In this case, if considering even the case where a reducing agent other than hydrocarbons is used, in the present invention, when the allowable injection pressure PZO increases after the injection pressure of the reducing agent feed valve is made to fall, the injection pressure of the reducing agent feed valve is increased by the reducing agent feed device 60. In the embodiment of the present invention, in this case as well, the limit injection pressure PZ after a fixed time "t" elapses is predicted, then the increasing control of the injection pressure PX is performed based on the predicted limit injection pressure PZ (t).

In this case, in the embodiment of the present invention, as shown in FIG. 12, a pressure rise ΔPU which is possible within a fixed time "t" by the hydrocarbon feed device 60 is found, and when it is predicted that even if making the injection pressure PX of the hydrocarbon feed valve 15 rise by exactly this pressure rise ΔPU, the predicted allowable injection pressure PZO would not be reached, the injection pressure PX of the hydrocarbon feed valve 15 is made to rise by exactly the pressure rise ΔPU. That is, at the time "e" of FIG. 12, it is judged that the predicted allowable injection pressure PZO would end up being exceeded if the injection pressure PX of the hydrocarbon feed valve 15 were made to rise by exactly the pressure rise ΔPU at the time "f". At this time, the action of increasing the injection pressure PX of the hydrocarbon feed valve 15 is not performed. As opposed to this, at the time "f" of FIG. 12, it is predicted that even if making the injection pressure PX of the hydrocarbon feed valve 15 rise by exactly the pressure rise ΔPU at the time "g", the predicted allowable injection pressure PZO would not be reached. At this time, the injection pressure PX of the hydrocarbon feed valve 15 is made to rise by exactly the pressure rise ΔPU during the time from the time "f" to the time "g".

That is, in an embodiment of the present invention, if considering also the case where a reducing agent other than hydrocarbons is used, when the reducing agent is injected, the allowable injection pressure after the elapse of a predetermined time period is predicted and, when the injection pressure of the reducing agent feed valve can be increased up to the predicted allowable injection pressure, the injection pressure of the reducing agent feed valve is made to increase. Note that, in this case, when the predicted allowable injection pressure is higher than the current injection pressure of the reducing agent feed valve, the injection pressure of the reducing agent feed valve can be made to increase up to the predicted allowable injection pressure.

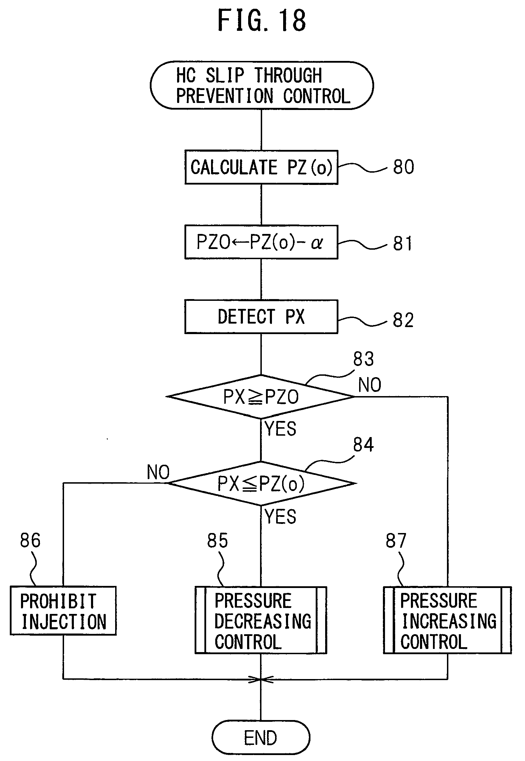

FIG. 18 shows a control routine for preventing slip through of hydrocarbons. This routine is performed by interruption every fixed time "t". Referring to FIG. 18, first, at step 80, the current limit injection pressure PZ(0) is calculated based on FIGS. 11B and 11C. Next, at step 81, the current allowable injection pressure PZO is calculated by subtracting a constant pressure α from the limit injection pressure PZ(0). Next, at step 82, the injection pressure PX of the hydrocarbon feed valve 15 is detected by the pressure sensor 66. Next, at step 83, it is judged if the injection pressure PX of the hydrocarbon feed valve 15 becomes higher than the allowable injection pressure PZO. When the injection pressure PX of the hydrocarbon feed valve 15 becomes higher than the allowable injection pressure PZO, the routine proceeds to step 84 where it is judged if the injection pressure PX of the hydrocarbon feed valve 15 is lower than the limit injection pressure PZ(0). At this time, usually, the injection pressure PX of the hydrocarbon feed valve 15 is lower than the limit injection pressure PZ(0).

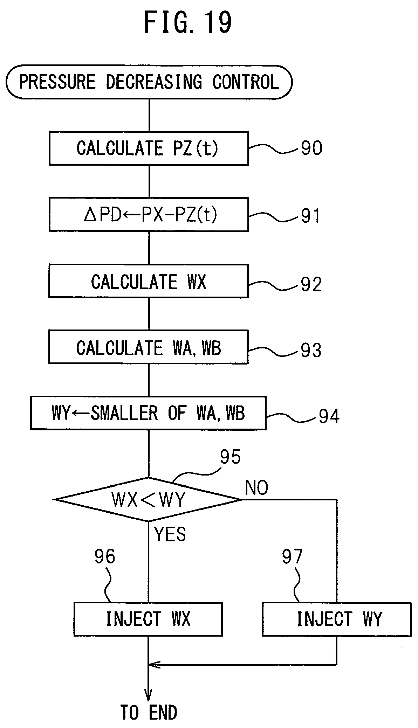

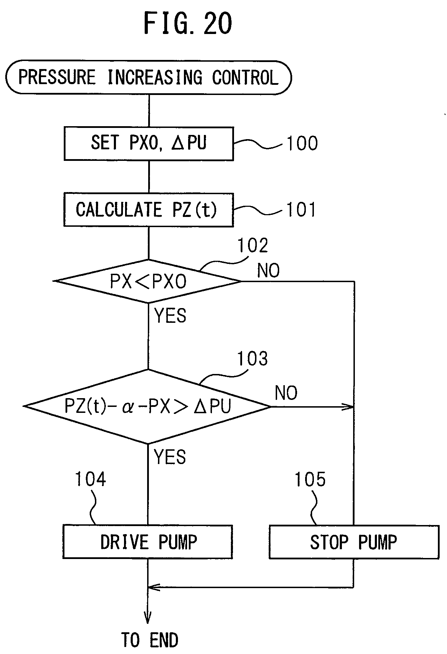

When it is judged at step 84 that the injection pressure PX of the hydrocarbon feed valve 15 is lower than the limit injection pressure PZ(0), the routine proceeds to step 85 where pressure decreasing control for lowering the injection pressure PX of the hydrocarbon feed valve 15 is performed. The routine for performing this pressure decreasing control is shown in FIG. 19. On the other hand, if hydrocarbons are injected from the hydrocarbon feed valve 15 when the injection pressure PX of the hydrocarbon feed valve 15 is higher than the limit injection pressure PZ(0), the danger of slip through of hydrocarbons occurring becomes extremely high. Therefore, when it is judged at step 83 that the injection pressure PX of the hydrocarbon feed valve 15 is higher than the limit injection pressure PZ(0), the routine proceeds to step 86 where the hydrocarbon feed valve 15 is prohibited from injecting hydrocarbons. On the other hand, when it is judged at step 83 that the injection pressure PX of the hydrocarbon feed valve 15 becomes lower than the allowable injection pressure PZO, the routine proceeds to step 87 where pressure increasing control for rising the injection pressure PX of the hydrocarbon feed valve 15 is performed. The routine for performing this pressure increasing control is shown in FIG. 20.

Next, the routine for pressure decreasing control which is shown in FIG. 19 will be explained. Referring to FIG. 19, first, at step 90, the routine for calculation of the predicted limit injection pressure which is shown in FIG. 13B is executed whereby the predicted limit injection pressure PZ(t) after the elapse of the time "t" is calculated. Next, at step 91, the target injection pressure drop $\Delta$PD is calculated by subtracting the predicted limit injection pressure PZ(t) from the current injection pressure PX. Next, at step 92, the hydrocarbon injection amount WX which is required for making the injection pressure PX drop by exactly the target injection pressure drop $\Delta$PD is calculated. Next, at step 93, the allowable injection amount WA is calculated from the map shown in FIG. 15C and the allowable injection amount WB is calculated from the map shown in FIG. 17C. Next, at step 94, the lesser of the allowable injection amount WA and the allowable injection amount WB is made the allowable injection amount WY.

Next, at step 95, it is judged if the hydrocarbon injection amount WX which was calculated at step 92 is smaller than the allowable injection amount WY. When the hydrocarbon injection amount WX is smaller than the allowable injection amount WY, the routine proceeds to step 96 where hydrocarbons are injected from the hydrocarbon feed valve 15 in the hydrocarbon injection amount WX. As opposed to this, when the hydrocarbon injection amount WX is greater than the allowable injection amount WY, the routine proceeds to step 97 where hydrocarbons are injected from the hydrocarbon feed valve 15 in the allowable injection amount WY. Note that, in another embodiment of the present invention, it is possible to use either the allowable injection amount WA or the allowable injection amount WB. In this case, either of the allowable injection amounts, for example, the allowable injection amount WA, is compared with the hydrocarbon injection amount WX, when the hydrocarbon injection amount WX is smaller than the allowable injection amount WA, hydrocarbons are injected from the hydrocarbon feed valve 15 in the hydrocarbon injection amount WX, while when the hydrocarbon injection amount WX is greater than the allowable injection amount WA, hydrocarbons are injected from the hydrocarbon feed valve 15 in the allowable injection amount WA.

Next, the pressure increasing control routine which is shown in FIG. 20 will be explained. Referring to FIG. 20, first, at step 100, the target injection pressure PXO of the hydrocarbon feed valve 15 and the pressure rise $\Delta$PU which is possible within by a fixed time "t" by the hydrocarbon feed device 60 are set. Usually, these target injection pressure PXO and pressure rise $\Delta$PU are made fixed values which are determined in advance. Next, at step 101, the routine for calculation of the predicted limit injection pressure which is shown in FIG. 13B is performed whereby the predicted limit injection pressure PZ(t) after the elapse of the time "t" is calculated. Next, at step 102, it is judged if the injection pressure PX of the hydrocarbon feed valve 15 is lower than the target injection pressure PXO. When the injection pressure PX of the hydrocarbon feed valve 15 is lower than the target injection pressure PXO, the routine proceeds to step 103 where it is judged if the difference between the predicted allowable injection pressure PZO (predicted limit injection pressure PZ(t)-$\alpha$) and the current injection pressure PX is larger than the pressure rise $\Delta$PU.

If the difference between the predicted allowable injection pressure PZO and the current injection pressure PX is larger than the pressure rise $\Delta$PU, the routine proceeds to step 104 where the pressurized piston 62 of the hydrocarbon feed device 60, that is, electric pump, is driven. Due to this, the injection pressure PX is made to rise. As opposed to this, when the difference between the predicted allowable injection pressure PZO and the current injection pressure PX is smaller than the amount of pressure rise $\Delta$PU, the routine proceeds to step 105 where the pressurized piston 62 of the hydrocarbon feed device 60, that is, the electric pump, stops being driven. At this time, the action of raising the pressure of the injection pressure PXO is stopped. On the other hand, when it is judged at step 102 that the injection pressure PX of the hydrocarbon feed valve 15 is not lower than the target injection pressure PXO, the routine proceeds to step 105 where the pressurized piston 62 of the hydrocarbon feed device 60, that is, the electric pump, stops being driven. Therefore, if the injection pressure PX of the hydrocarbon feed valve 15 reaches the target injection pressure PXO, the injection pressure PX of the hydrocarbon feed valve 15 is maintained at the target injection pressure PXO.

Reference Signs List

| | |
|---|---|
| 4 | intake manifold |
| 5 | exhaust manifold |
| 7 | exhaust turbocharger |
| 12 | exhaust pipe |
| 13 | exhaust purification catalyst |
| 14 | particulate filter |
| 15 | hydrocarbon feed valve |
| 60 | hydrocarbon feed device |

**Claims**

1. An exhaust purification system of an internal combustion engine (1) comprising an exhaust purification catalyst (13) which is arranged in an engine exhaust passage (12), a reducing agent feed valve (15) which is arranged in the engine exhaust passage (12) upstream of the exhaust purification catalyst (13), a reducing agent feed device (60) for feeding a reducing agent to the reducing agent feed valve (15), and a reducing agent injection control device (30) for controlling the injection action of the reducing agent from the reducing agent feed valve (15), wherein the reducing agent feed device (60) has the function of making the injection pressure of the reducing agent feed valve (15) increase, but does not have the function of making the injection pressure of the reducing agent feed valve (15) decrease, and the injection pressure of the reducing agent feed valve (15) has a limit injection pressure which causes slip through of the reducing agent in the exhaust purification catalyst (13) when the reducing agent is injected from the reducing agent feed valve (15), **characterized in that** the reducing agent injection control device is adapted to control the injection such that when the injection pressure of the reducing agent feed valve (15) exceeds an allowable injection pressure, which is lower than the limit injection pressure, by exactly a predetermined pressure, the reducing agent is injected from the reducing agent feed valve (15), whereby the injection pressure of the reducing agent feed valve (15) is made to fall.

2. The exhaust purification system of an internal combustion engine (1) as claimed in claim 1, wherein the reducing agent injection control device is adapted to control the injection such that when the injection pressure of the reducing agent feed valve (15) exceeds the allowable injection pressure, an allowable injection pressure after the elapse of a predetermined time period is predicted and the reducing agent is injected from the reducing agent feed valve (15) so that the injection pressure of the reducing agent feed valve (15) becomes an injection pressure lower than the predicted allowable injection pressure or the predicted allowable injection pressure.

3. The exhaust purification system of an internal combustion engine (1) as claimed in claim 1, wherein the reducing agent injection control device is adapted to control the injection such that when the injection pressure of the reducing agent feed valve (15) exceeds the allowable injection pressure, an allowable injection pressure after the elapse of a predetermined time period is predicted, a reducing agent feed amount which is injected when the injection pressure of the reducing agent feed valve (15)is lowered to an injection pressure lower than the predicted allowable injection pressure or to the predicted allowable injection pressure is calculated, and the reducing agent is injected in the reducing agent feed amount from the reducing agent feed valve (15) when the reducing agent feed amount is smaller than the predetermined allowable injection amount.

4. The exhaust purification system of an internal combustion engine (1) as claimed in claim 3, wherein the reducing agent injection control device is adapted to control the injection such that the reducing agent is injected in a predetermined allowable injection amount from the reducing agent feed valve (15) when the reducing agent feed amount is greater than the predetermined allowable injection amount.

5. The exhaust purification system of an internal combustion engine (1) as claimed in claim 3, wherein the reducing agent injection control device is adapted to control the injection such that the predetermined allowable injection amount is an injection amount which enables a raised temperature of the exhaust purification catalyst (13) due to injection of the reducing agent to be kept to a predetermined temperature or less.

6. The exhaust purification system of an internal combustion engine (1) as claimed in claim 3, wherein the reducing agent injection control device is adapted to control the injection such that the predetermined allowable injection amount is an injection amount which enables the air-fuel ratio of the exhaust gas which flows out from the exhaust purification catalyst (13) to be kept from falling below a predetermined air-fuel ratio.

7. The exhaust purification system of an internal combustion engine (1) as claimed in any of claims 1 to 6, wherein the reducing agent injection control device is adapted to control the injection such that when the allowable injection pressure increases after the injection pressure of the reducing agent feed valve (15) is made to fall, the injection pressure of the reducing agent feed valve (15) is increased by the reducing agent feed device (60).

8. The exhaust purification system of an internal combustion engine (1) as claimed in any of claims 1 to 7, wherein the reducing agent injection control device is adapted to control the injection such that when the reducing agent is injected from the reducing agent feed valve (15), an allowable injection pressure after the elapse of a predetermined time period is predicted, and the injection pressure of the reducing agent feed valve (15) is made to increase when the injection pressure of the reducing agent feed valve (15) can be increased to the predicted allowable injection pressure.

9. The exhaust purification system of an internal combustion engine (1) as claimed in any of claims 1 to 8, wherein the reducing agent injection control device is adapted to control the injection such that said limit injection pressure is a function of a flow rate of exhaust gas, a temperature of the exhaust purification catalyst (13), and a concentration of oxygen in the exhaust gas and is calculated based on the flow rate of the exhaust gas, the temperature of the exhaust purification catalyst (13), and the concentration of oxygen in the exhaust gas, and said allowable injection pressure is a pressure obtained by subtracting a fixed pressure from said limit injection pressure.

**Patentansprüche**

1. Abgasreinigungssystem eines Verbrennungsmotors (1), umfassend einen Abgasreinigungskatalysator (13), der in einer Motorabgaspassage (12) angeordnet ist, ein Reduktionsmittelzuführventil (15), das in der Motorabgaspassage (12) stromaufwärts des Abgasreinigungskatalysators (13) angeordnet ist, eine Reduktionsmittelzuführvorrichtung (60) zum Zuführen eines Reduktionsmittels zu dem Reduktionsmittelzuführventil (15), und eine Reduktionsmitteleinspritzsteuerungsvorrichtung (30) zum Steuern der Einspritzaktion des Reduktionsmittels aus dem Reduktionsmittelzuführventil (15), wobei die Reduktionsmittelzuführvorrichtung (60) die Funktion hat, den Einspritzdruck des Reduktionsmittelzuführventils (15) zu erhöhen, aber nicht die Funktion hat, den Einspritzdruck des Reduktionsmittelzuführventils (15) zu verringern, und der Einspritzdruck des Reduktionsmittelzuführventils (15) einen Grenzeinspritzdruck hat, der ein freies Durchströmen des Reduktionsmittels in dem Abgasreinigungskatalysator (13) bewirkt, wenn das Reduktionsmittel aus dem Reduktionsmittelzuführventil (15) eingespritzt wird,
**dadurch gekennzeichnet, dass** die
Reduktionsmitteleinspritzsteuerungsvorrichtung dafür ausgelegt ist, die Einspritzung so zu steuern, dass, wenn der Einspritzdruck des Reduktionsmittelzuführventils (15) einen zulässigen Einspritzdruck, der niedriger als der Grenzeinspritzdruck ist, um einen exakt vorgegebenen Druck übersteigt, das Reduktionsmittel aus dem Reduktionsmittelzuführventil (15) eingespritzt wird, wodurch bewirkt wird, dass der Einspritzdruck des Reduktionsmittelzuführventils (15) sinkt.

2. Abgasreinigungssystem eines Verbrennungsmotors (1) nach Anspruch 1, wobei die Reduktionsmitteleinspritzsteuerungsvorrichtung dafür ausgelegt ist, die Einspritzung so zu steuern, dass, wenn der Einspritzdruck des Reduktionsmittelzuführventils (15) den zulässigen Einspritzdruck übersteigt, ein zulässiger Einspritzdruck nach dem Verstreichen eines vorgegebenen Zeitraums vorhergesagt wird und das Reduktionsmittel aus dem Reduktionsmittelzuführventil (15) so eingespritzt wird, dass der Einspritzdruck des Reduktionsmittelzuführventils (15) zu einem Einspritzdruck, der niedriger als der vorhergesagte zulässige Einspritzdruck ist, oder der vorhergesagte zulässige Einspritzdruck wird.

3. Abgasreinigungssystem eines Verbrennungsmotors (1) nach Anspruch 1, wobei die Reduktionsmitteleinspritzsteuerungsvorrichtung dafür ausgelegt ist, die Einspritzung so zu steuern, dass, wenn der Einspritzdruck des Reduktionsmittelzuführventils (15) den zulässigen Einspritzdruck übersteigt, ein zulässiger Einspritzdruck nach dem Verstreichen eines vorgegebenen Zeitraums vorhergesagt wird, eine Reduktionsmittelzuführmenge, die eingespritzt wird, wenn der Einspritzdruck des Reduktionsmittelzuführventils (15) auf einen Einspritzdruck, der niedriger als der vorhergesagte zulässige Einspritzdruck ist, oder auf den vorhergesagten zulässigen Einspritzdruck gesenkt wird, berechnet wird, und das Reduktionsmittel in der Reduktionsmittelzuführmenge aus dem Reduktionsmittelzuführventil (15) eingespritzt wird, wenn die Reduktionsmittelzuführmenge kleiner ist als die vorgegebene zulässige Einspritzmenge.

4. Abgasreinigungssystem eines Verbrennungsmotors (1) nach Anspruch 3, wobei die Reduktionsmitteleinspritzsteuerungsvorrichtung dafür ausgelegt ist, die Einspritzung so zu steuern, dass das Reduktionsmittel in einer vorgegebenen zulässigen Einspritzmenge aus dem Reduktionsmittelzuführventil (15) eingespritzt wird, wenn die Reduktionsmittelzuführmenge größer ist als die vorgegebene zulässige Einspritzmenge.

5. Abgasreinigungssystem eines Verbrennungsmotors (1) nach Anspruch 3, wobei die Reduktionsmitteleinspritzsteuerungsvorrichtung dafür ausgelegt ist, die Einspritzung so zu steuern, dass die vorgegebene zulässige Einspritzmenge eine Einspritzmenge ist, die es ermöglicht, eine erhöhte Temperatur des Abgasreinigungskatalysators (13) aufgrund der Einspritzung des Reduktionsmittels auf einer vorgegebenen Temperatur oder weniger zu halten.

6. Abgasreinigungssystem eines Verbrennungsmotors (1) nach Anspruch 3, wobei die Reduktionsmitteleinspritzsteuerungsvorrichtung dafür ausgelegt ist, die Einspritzung so zu steuern, dass die vorgegebene zulässige Einspritzmenge eine Einspritzmenge ist, die es ermöglicht zu verhindern, das Kraftstoff-Luft-Verhältnis des Abgases, das den Abgasreinigungskatalysator (13) verlässt, unter ein vorgegebenes Kraftstoff-Luft-Verhältnis sinkt.

7. Abgasreinigungssystem eines Verbrennungsmotors (1) nach einem der Ansprüche 1 bis 6, wobei die Reduktionsmitteleinspritzsteuerungsvorrichtung dafür ausgelegt ist, die Einspritzung so zu steuern, dass, wenn der zulässige Einspritzdruck steigt, nachdem veranlasst wurde, dass der Einspritzdruck des Reduktionsmittelzuführventils (15) sinkt, der Einspritzdruck des Reduktionsmittelzuführventils (15) durch die Reduktionsmittelzuführvorrichtung (60) angehoben wird.

8. Abgasreinigungssystem eines Verbrennungsmotors (1) nach einem der Ansprüche 1 bis 7, wobei die Reduktionsmitteleinspritzsteuerungsvorrichtung dafür ausgelegt ist, die Einspritzung so zu steuern, dass, wenn das Reduktionsmittel aus dem Reduktionsmittelzuführventils (15) eingespritzt wird, ein zulässiger Einspritzdruck nach dem Verstreichen eines vorgegebenen Zeitraums vorhergesagt wird, und bewirkt wird, dass der Einspritzdruck des Reduktionsmittelzuführventils (15) steigt, wenn der Einspritzdruck des Reduktionsmittelzuführventils (15) auf den vorhergesagten zulässigen Einspritzdruck erhöht werden kann.

9. Abgasreinigungssystem eines Verbrennungsmotors (1) nach einem der Ansprüche 1 bis 8, wobei die Reduktionsmitteleinspritzsteuerungsvorrichtung dafür ausgelegt ist, die Einspritzung so zu steuern, dass der Grenzeinspritzdruck eine Funktion einer Strömungsrate des Abgases, einer Temperatur des Abgasreinigungskatalysators (13) und einer Konzentration von Sauerstoff im Abgas ist und auf der Basis der Strömungsrate des Abgases, der Temperatur des Abgasreinigungskatalysators (13) und der Konzentration von Sauerstoff im Abgas berechnet wird, und der zulässige Einspritzdruck ein Druck ist, der erhalten wird, indem ein fixer Druck von dem Grenzeinspritzdruck subtrahiert wird.

## Revendications

1. Système de purification d'échappement d'un moteur à combustion interne (1) comportant un catalyseur de purification d'échappement (13) qui est disposé dans un passage d'échappement de moteur (12), une soupape d'alimentation en agent de réduction (15) qui est disposée dans le passage d'échappement de moteur (12) en amont du catalyseur de purification d'échappement (13), un dispositif d'alimentation en agent de réduction (60) pour l'alimentation en agent de réduction de la soupape d'alimentation en agent de réduction (15), et un dispositif de commande d'injection d'agent de réduction (30) pour la commande de l'action d'injection de l'agent de réduction à partir de la soupape d'alimentation en agent de réduction (15), dans lequel le dispositif d'alimentation en agent de réduction (60) a pour fonction d'amener la pression d'injection de la soupape d'alimentation en agent de réduction (15) à augmenter, mais n'a pas pour fonction d'amener la pression d'injection de la soupape d'alimentation en agent de réduction (15) à diminuer, et la pression d'injection de la soupape d'alimentation en agent de réduction (15) a une pression d'injection de limite qui provoque un glissement à travers l'agent de réduction dans le catalyseur de purification d'échappement (13) quand l'agent de réduction est injecté à partir de la soupape d'alimentation en agent de réduction (15), **caractérisé en ce que** le dispositif de commande d'injection d'agent de réduction est prévu pour commander l'injection de telle sorte que, quand la pression d'injection de la soupape d'alimentation en agent de réduction (15) dépasse une pression d'injection admissible, qui est inférieure à la pression d'injection de limite, d'exactement une pression prédéterminée, l'agent de réduction est injecté à partir de la soupape d'alimentation en agent de réduction (15), de sorte que la pression d'injection de la soupape d'alimentation en agent de réduction (15) est amenée à chuter.

2. Système de purification d'échappement d'un moteur à combustion interne (1) selon la revendication 1, dans lequel le dispositif de commande d'injection d'agent de réduction est prévu pour commander l'injection de telle sorte que, quand la pression d'injection de la soupape d'alimentation en agent de réduction (15) dépasse la pression d'injection admissible, une pression d'injection admissible après l'écoulement d'une durée prédéterminée est prédite et l'agent de réduction est injecté à partir de la soupape d'alimentation en agent de réduction (15) de telle sorte que la pression d'injection de la soupape d'alimentation en agent de réduction (15) devient une pression d'injection plus basse que la pression d'injection admissible prédite ou la pression d'injection admissible prédite.

3. Système de purification d'échappement d'un moteur à combustion interne (1) selon la revendication 1, dans lequel le dispositif de commande d'injection d'agent de réduction est prévu pour commander l'injection de telle sorte que, quand la pression d'injection de la soupape d'alimentation en agent de réduction (15) dépasse la pression d'injection admissible, une pression d'injection admissible après l'écoulement d'une durée prédéterminée est prédite, une quantité d'alimentation en agent de réduction qui est injectée quand la pression d'injection de la soupape d'alimentation en agent de réduction (15) est abaissée à une pression d'injection plus basse que la pression d'injection admissible prédite ou à la pression d'injection admissible prédite est calculée, et l'agent de réduction est injecté dans la quantité d'alimentation en agent de réduction à partir de la soupape d'alimentation en agent de réduction (15) quand la quantité d'alimentation en agent de réduction est plus petite que la quantité d'injection admissible prédéterminée.

4. Système de purification d'échappement d'un moteur à combustion interne (1) selon la revendication 3, dans lequel le dispositif de commande d'injection d'agent de réduction est prévu pour commander l'injection de telle sorte que l'agent de réduction est injecté dans une quantité d'injection admissible prédéterminée à partir de la soupape d'alimentation en agent de réduction (15) quand la quantité d'alimentation en agent de réduction est plus grande que la quantité d'injection admissible prédéterminée.

5. Système de purification d'échappement d'un moteur à combustion interne (1) selon la revendication 3, dans lequel le dispositif de commande d'injection d'agent de réduction est prévu pour commander l'injection de telle sorte que la quantité d'injection admissible prédéterminée est une quantité d'injection qui permet à une température élevée du catalyseur de purification d'échappement (13) du fait d'une injection de l'agent de réduction d'être maintenue à une température prédéterminée ou moins.

6. Système de purification d'échappement d'un moteur à combustion interne (1) selon la revendication 3, dans lequel le dispositif de commande d'injection d'agent de réduction est prévu pour commander l'injection de telle sorte que la quantité d'injection admissible prédéterminée est une quantité d'injection qui permet au rapport air-carburant du gaz d'échappement qui s'écoule hors du catalyseur de purification d'échappement (13) d'être empêcher de chuter en dessous d'un rapport air-carburant prédéterminé.

7. Système de purification d'échappement d'un moteur à combustion interne (1) selon l'une quelconque des revendications 1 à 6, dans lequel le dispositif de commande d'injection d'agent de réduction est prévu pour commander l'injection de telle sorte que, quand la pression d'injection admissible augmente une fois que la pression d'injection de la soupape d'alimentation en agent de réduction (15) est amenée à chuter, la pression d'injection de la soupape d'alimentation en agent de réduction (15) est augmentée par le dispositif d'alimentation en agent de réduction (60).

8. Système de purification d'échappement d'un moteur à combustion interne (1) selon l'une quelconque des revendications 1 à 7, dans lequel le dispositif de commande d'injection d'agent de réduction est prévu pour commander l'injection de telle sorte que, quand l'agent de réduction est injecté à partir de la soupape d'alimentation en agent de réduction (15), une pression d'injection admissible après l'écoulement d'une durée prédéterminée est prédite, et la pression d'injection de la soupape d'alimentation en agent de réduction (15) est amenée à augmenter quand la pression d'injection de la soupape d'alimentation en agent de réduction (15) peut être augmentée jusqu'à la pression d'injection admissible prédite.

9. Système de purification d'échappement d'un moteur à combustion interne (1) selon l'une quelconque des revendications 1 à 8, dans lequel le dispositif de commande d'injection d'agent de réduction est prévu pour commander l'injection de telle sorte que ladite pression d'injection de limite est une fonction d'un débit de gaz d'échappement, d'une température du catalyseur de purification d'échappement (13), et d'une concentration en oxygène dans le gaz d'échappement et est calculée sur la base du débit du gaz d'échappement, de la température du catalyseur de purification d'échappement (13), et de la concentration en oxygène dans le gaz d'échappement, et ladite pression d'injection admissible est une pression obtenue en soustrayant une pression fixe de ladite pression d'injection de limite.

# FIG. 1

LOAD SENSOR

CRANK ANGLE SENSOR

A/D

A/D

A/D

INPUT PORT

OUTPUT PORT

ROM

RAM

CPU

# FIG. 2

# FIG. 3

# FIG. 4A

NO $\longrightarrow$     NOx $\longrightarrow$     N$_2$,CO$_2$,H$_2$O

NO$_2$ $\searrow$

R–NH$_2$     NOx*     R–NCO     R–NCO

51    50    53    51

# FIG. 4B

$$H-\overset{\displaystyle H}{\underset{\displaystyle H}{C}}-\overset{\displaystyle H}{\underset{\displaystyle H}{C}}-\overset{\displaystyle H}{\underset{\displaystyle H}{C}}\,\bullet$$

$$H-\overset{\displaystyle H}{\underset{\displaystyle H}{C}}-\overset{\displaystyle H}{\underset{\displaystyle H}{C}}-\overset{\displaystyle H}{\underset{\displaystyle H}{C}}-\overset{\displaystyle H}{\underset{\displaystyle H}{C}}\,\bullet$$

NOx*    NOx* $\longrightarrow$ R–NCO    R–NH$_2$

51    50    53    51

# FIG. 5A

# FIG. 5B

FIG. 6

EP 2 873 820 B1

# FIG. 7

HYDROCARBON INJECTION SIGNAL — WT

PUMP DRIVE SIGNAL

FUEL PRESSURE PX — PXO

AIR-FUEL RATIO — LEAN ↑ / ↓ RICH

STOICHIOMETRIC AIR-FUEL RATIO

# FIG. 8A

HC SLIP THROUGH
AMOUNT

TC

# FIG. 8B

HC SLIP THROUGH
AMOUNT

GA

# FIG. 8C

HC SLIP THROUGH
AMOUNT

$O_2$ CONCENTRATION

# FIG. 9

## FIG. 10A

PZ

TC

## FIG. 10B

PZ

GA

## FIG. 10C

PZ

$O_2$ CONCENTRATION

## FIG. 11A

## FIG. 11B

## FIG. 11C

# FIG. 12

# FIG. 13A

# FIG. 13B

# FIG. 14A

# FIG. 14B

## FIG. 15A

WA

GA

## FIG. 15B

WA

TC

## FIG. 15C

GA

$WA_{11}$    $WA_{21}$  ------- $WA_{m1}$
$WA_{12}$

$WA_{1n}$  --------------  $WA_{mn}$

TC

## FIG. 16A

INJECTION
AMOUNT WZ

LEAN

AIR-FUEL
RATIO (A/F)

STOICHIOMETRIC
AIR-FUEL RATIO

RICH

$(A/F)_b$

$(A/F)_p$

$(A/F)_c$

## FIG. 16B

$(A/F)_p$

$(A/F)_c$

WB

INJECTION AMOUNT WZ
PER INJECTION

## FIG. 17A

## FIG. 17B

## FIG. 17C

# FIG. 18

HC SLIP THROUGH
PREVENTION CONTROL

CALCULATE PZ(o) ～ 80

$PZO \leftarrow PZ(o) - \alpha$ ～ 81

DETECT PX ～ 82

83
$PX \geqq PZO$ — NO

YES

84
NO — $PX \leqq PZ(o)$

YES

86
PROHIBIT
INJECTION

85
PRESSURE
DECREASING
CONTROL

87
PRESSURE
INCREASING
CONTROL

END

FIG. 19

PRESSURE DECREASING CONTROL

CALCULATE PZ(t) —90

$\Delta$PD←PX−PZ(t) —91

CALCULATE WX —92

CALCULATE WA, WB —93

WY←SMALLER OF WA, WB —94

95

WX<WY — NO

YES

96                    97

INJECT WX        INJECT WY

TO END

# FIG. 20

```
        ( PRESSURE INCREASING CONTROL )
                       |
              +-------------------+
              |   SET PX0, ΔPU    |~~~100
              +-------------------+
                       |
              +-------------------+
              |  CALCULATE PZ(t)  |~~~101
              +-------------------+
                       |
                      102
                   <PX<PXO>----NO----+
                       |             |
                      YES            |
                       |             |
                      103            |
             <PZ(t)-α-PX>ΔPU>--NO---->
                       |             |
                      YES            |
         104                   105   |
      +-------------+      +-------------+
      | DRIVE PUMP  |      |  STOP PUMP  |
      +-------------+      +-------------+
              |                  |
              +------------------+
                       |
                       v
                    TO END
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102010055642 A1

- JP 2012215154 A